# FASCICULE DE BREVET EUROPEEN

(11) **EP 1 828 742 B1**
(45) Date de publication et mention de la délivrance du brevet: **07.05.2008**
(21) Numéro de dépôt: 05822973.3
(22) Date de dépôt: 24.11.2005
(51) Int. Cl.: G01M 11/02, G02C 7/02, G02B 3/00

(54) **PROCEDE ET APPAREIL DE MESURE LOCALE DES CARACTERISTIQUES DE REFRACTION D'UNE LENTILLE EN UN OU PLUSIEURS POINTS SPECIFIQUES DE CETTE LENTILLE**
VERFAHREN UND VORRICHTUNG ZUR LOKALEN MESSUNG DER BRECHUNGSEIGENSCHAFTEN EINER LINSE AN EINEM ODER MEHREREN BESTIMMTEN PUNKTEN DIESER LINSE
METHOD AND APPARATUS FOR LOCALLY MEASURING REFRACTIVE CHARACTERISTICS OF A LENS IN ONE OR SEVERAL SPECIFIC POINTS OF SAID LENS

(30) Priorité: 23.12.2004 FR 0413877
(43) Date de publication de la demande: 05.09.2007
(73) Titulaire: ESSILOR INTERNATIONAL Compagnie Générale d'Optique, 94227 Charenton (FR)
(72) Inventeur: DIVO, Fabien, Essilor International, F-94227 Charenton (FR); THEPOT, James, Essilor International, F-94227 Charenton (FR)
(74) Mandataire: Chauvin, Vincent
(86) Numéro de dépôt international: PCT/FR2005/002916
(87) Numéro de publication internationale: WO 2006/070084

(56) Documents cités:
- FR-A- 2 737 568
- US-A- 3 880 525
- US-A- 4 641 962
- US-A- 5 581 347
- US-A- 5 825 476
- US-A- 5 855 074
- US-A1- 2003 112 426

## Description

### DOMAINE TECHNIQUE AUQUEL SE RAPPORTE L'INVENTION

La présente invention concerne de manière générale la mesure d'une lentille optique telle qu'une lentille ophtalmique d'une paire de lunettes correctrices et vise plus particulièrement un appareil de mesure des caractéristiques de réfraction d'une telle lentille en un ou plusieurs points spécifiques ou déterminés de cette lentille.

### ARRIERE-PLAN TECHNOLOGIQUE

Avant de monter une paire de lentilles ophtalmiques de lunettes correctrices dans leur monture, l'opticien souhaite en général vérifier si les caractéristiques optiques principales de ces lentilles, et en particulier leurs caractéristiques de réfraction en un ou plusieurs points, correspondent bien à la prescription pour laquelle elles ont été commandées. Il s'agit par exemple, actuellement, de vérifier les puissances sphériques, cylindriques et prismatique et l'orientation cylindrique et prismatique au(x) points(s) de prescription. Lorsque la lentille prescrite est unifocale, le point de prescription, où la mesure est à effectuer, est le centre optique de la lentille. Lorsque la lentille est bifocale, les points de prescription sont les points de référence pour la vision de près et pour la vision de loin, dont les positions sont définies par le fabricant dans le référentiel marqué de la lentille. Plus généralement, on peut souhaiter vérifier les caractéristiques de réfraction de la lentille en un ou plusieurs points d'intérêt ayant une position déterminée dans le référentiel de la lentille.

Les caractéristiques de réfraction de la lentille sont certes inscrites par le fabricant sur la pochette dans laquelle est livrée chaque lentille. Mais de nombreux opticiens préfèrent vérifier la conformité des caractéristiques de réfraction principales effectives de chaque lentille juste avant le montage afin d'éliminer tout risque d'erreur. Il peut en outre arriver que la pochette portant la prescription de la lentille soit absente, ce qui est par exemple le cas lorsque l'on souhaite connaître ou vérifier les caractéristiques d'une lentille déjà montée ou préparée au montage.

En outre, en amont du montage de la lentille sur sa monture par l'opticien, le fabricant de lentilles souhaite également vérifier les caractéristiques optiques des lentilles qu'il fabrique, ou encore mesurer les caractéristiques optiques des lentilles de la concurrence.

Pour effectuer ces mesures et/ou vérifications, les opticiens et les fabricants ont donc besoin d'un appareil capable de mesurer les principales caractéristiques de réfraction d'une lentille en un ou plusieurs points définis de celle-ci.

On connaît plusieurs appareils répondant plus ou moins convenablement à ce besoin. Dans la perspective de la présente invention, on peut classer ces appareils existants dans deux catégories principales. On distingue ainsi, d'une part, les appareils de mesure à champ étroit, ayant un axe de mesure unique et fixe et conçus pour réaliser une mesure ciblée, sur un zone de mesure d'étendue restreinte autour du point de mesure, et, d'autre part, les appareils de cartographie à champ large, conçus pour réaliser une mesure complète, ou tout au moins sur une large étendue de la lentille, en un grand nombre de points simultanément.

Parmi les appareils de mesure à champ étroit, on compte un des appareils les plus utilisés depuis de nombreuses années, appelé frontofocomètre. Un des premiers appareils de ce genre est décrit dans le brevet U.S. No 1,383,678. Le principe de fonctionnement de cet appareil reste inchangé de nos jours. Il lui a simplement été apporté des améliorations d'ordre électronique touchant à l'assistance à l'appréciation du pouvoir de réfraction de la lentille dans la zone de mesure et à l'interface utilisateur. Cet appareil donne aujourd'hui encore satisfaction, notamment en termes de précision de mesure, lorsqu'il est employé, comme cela est généralement le cas, par un opérateur qualifié et expérimenté. Mais l'opération de mesure est relativement longue et ne peut être confiée, sans risque d'erreur, à un opérateur moins qualifié ou débutant. L'utilisation de cet appareil a don tendance à pénaliser la rentabilité ou la qualité du travail de l'opticien.

Cet appareil se caractérise en effet par le fait qu'il possède un axe de mesure unique et fixe, suivant lequel est agencé un système d'observation de la lentille à champ étroit. Il appartient donc à l'opérateur de manipuler la lentille à mesurer pour amener le point d'intérêt (point de mesure) de la lentille, auquel il souhaite mesurer une ou plusieurs caractéristiques de réfraction de cette lentille, sur l'axe optique de l'appareil. L'opérateur peut alors apprécier le pouvoir de réfraction de la zone de la lentille (zone de mesure) située dans le champ de l'appareil. La zone de mesure est étroite, avec en pratique un diamètre de l'ordre de 8 mm. On comprend dans ces conditions que l'utilisation de ce genre d'appareil nécessite des manipulations consommatrices de temps et sources d'imprécision dans l'hypothèse où le point de mesure de la lentille n'est pas positionné avec précision sur l'axe de mesure de l'appareil. De plus, si l'on souhaite réaliser plusieurs mesures sur une même lentille en plusieurs points de celle-ci, comme cela est par exemple le cas pour la mesure des puissances et axes aux points de référence pour la vision de près et pour la vision de loin des lentilles multifocales, il est nécessaire de multiplier les manipulations, ce qui rallonge encore le temps de mesure.

Un autre principe de mesure à champ étroit, dédié à la mesure de puissances réfractives d'une lentille unifocale en son centre, est décrit dans l'article "Testing and centering of lenses by means of a Hartmann test with four holes", Optical Engineering, Vol.31 No.7 pp. 1551-1555, juillet 1992, Malacara. Un appareil faisant application des principes décrits dans ce document est décrit plus précisément dans le brevet U.S. No 3,880,525. Cet appareil comporte :
- un support agencé pour recevoir une telle lentille,
- d'un premier côté du support de lentille, des moyens d'éclairement incluant un système optique pour élaborer un faisceau collimaté de rayons lumineux dirigé vers la lentille ophtalmique installée sur ledit support, et
- d'un second côté du support, des moyens de mesure de la déviation imprimée par la lentille à ces rayons lumineux, comportant un écran de projection de l'ombre de la lentille et des moyens de lecture et de numérisation de l'image projetée sur l'écran de projection,
- des moyens de détachement de rayons lumineux du faisceau lumineux, aptes à détacher un groupe localisé d'au moins trois rayons lumineux non coplanaires regroupés autour d'un axe de mesure passant par le centre de la lentille, dans un cylindre de mesure ayant un diamètre sensiblement inférieur à celui de la lentille mesurée.

En pratique, les moyens de détachement de rayons consistent en un masque perforé de quelques trous, typiquement au nombre de quatre, laissant passer autant de rayons lumineux ainsi détachés du faisceau. Contrairement aux appareils de cartographie, les rayons détachés sont regroupés autour d'un point de mesure fixe qui coïncide avec le centre de la lentille et sont contenus dans un rayon de quelques millimètres afin d'obtenir une valeur précise de puissance locale au centre de la lentille. Il est précisé qu'une mesure globale sur une zone plus étendue de la lentille, voire sur l'ensemble de la lentille serait imprécise dans la mesure où les caractéristiques réfractives de la lentille sur le reste de sa surface diffèrent sensiblement de celles mesurées dans sa zone centrale localisée. Quoi qu'il en soit l'axe de mesure de cet appareil est unique et fixe.

Dans ces conditions, on perçoit immédiatement les limites et inconvénients de cet appareil. Son champ d'application est restreint aux lentilles unifocales et ne permet pas en tout cas de mesurer les caractéristiques de réfraction d'une lentille en d'autres points que son centre géométrique, sans déplacement de la lentille, avec la perte de temps et les risques d'erreur qu'une telle manipulation entraînerait, comme déjà évoqué pour les frontofocomètres.

On connaît enfin des appareils de mesure cartographique à champ large, que l'on peut qualifier d'appareils à axes de mesure multiples fixes en ce sens qu'ils sont conçus pour effectuer simultanément une pluralité de mesures des puissances réfractives de la lentille en un nombre élevé de points de mesure régulièrement répartis sur toute l'étendue de la lentille à mesurer. Il s'agit typiquement d'appareils mettant en oeuvre des tests de Hartmann ou équivalent tels que décrits dans l'article "Hartmann Test", Optical Shop Testing, Chap.10, pp. 367-396, I.Ghozeil, édité par D.Malacara, 1992. Un exemple d'un tel appareil est par exemple décrit dans le brevet U.S. No 4,641,962. Ces appareils de cartographie comportent des moyens d'éclairement pour élaborer un faisceau collimaté de rayons lumineux parallèles dirigés vers la lentille, un séparateur de faisceau pour séparer les faisceaux en une pluralité de rayons lumineux régulièrement espacés pour traverser la lentille en une multiplicité de points répartis sur toute l'étendue de la lentille, un écran de projection associé à un capteur et à des moyens de mesure. Les moyens de mesure sont chargés de mesurer la déviation imprimée par la lentille aux différents rayons lumineux, puis d'élaborer une ou plusieurs cartes de puissance(s) de la lentille sur toute son étendue.

Ces appareils sont surtout utiles lorsqu'il s'agit de fournir une vue d'ensemble des caractéristiques de réfraction de la lentille et de leur répartition dans ses différentes zones. Mais ils ne donnent pas entière satisfaction lorsqu'ils sont utilisés pour mesurer des caractéristiques de réfraction en un nombre limité de points spécifiques de la lentille et ce en raison principalement de leur manque de précision, de leur lenteur et de leur coût. Ces appareils réalisent en effet systématiquement une mesure de puissance sur toute l'étendue de la lentille, ce qui implique concrètement de réaliser la mesure avec des rayons qui sont répartis sur l'ensemble de la lentille selon un pas insuffisamment fin ou improprement centré ou axé au regard de la position du point de mesure considéré. Le caractère cartographique de le mesure implique également, pour le traitement électronique de cette mesure, des besoins en mémoire importants pour le stockage de la cartographie complète de la lentille, des temps de calcul élevés pour l'établissement de la cartographie, des moyens de mesure de déflectométrie complexes ou imprécis, ces moyens de mesure devant permettre la mesure précise de tous les points de la lentille simultanément. Or, selon les constatations de la demanderesse, la plupart des points mesurés se révèlent inutiles à la vérification des caractéristiques de prescription d'une lentille ophtalmique. Il se pose en particulier un problème de recalage consistant à distinguer les différents impacts des rayons lumineux sur l'écran de projection pour les associer individuellement aux rayons dont ils sont issus et ce compte-tenu du nombre élevé et de la proximité des impacts des rayons sur l'écran de projection. La résolution de cette problématique du recalage impose la mise en oeuvre de moyens de recalage spécifiques qui, pour être fiables, s'avèrent relativement complexes, consommateurs de ressource (en particulier de temps de traitement) et coûteux

Par ailleurs, la cartographie déflectométrique de la lentille est réalisée au moyen d'un masque ou matrice de Hartmann ou équivalent qui, pour permettre une mesure précise, devrait présenter un pas aussi fin que possible. Or, un tel resserrement des éléments séparateurs de faisceau (motifs, microlentilles, etc.) impliquerait en contrepartie, d'une part, un alourdissement des calculs et, d'autre part, une aggravation de la problématique de recalage pour la résolution de laquelle il est alors nécessaire de mettre en oeuvre des moyens de recalage plus complexes.

### OBJET DE L'INVENTION

Un but de la présente invention est de proposer un procédé et un appareil de mesure de caractéristiques réfractives alternatifs aux procédés et appareils existants, qui permette de réaliser des mesures locales d'une lentille en des points spécifiques de celle-ci, de façon rapide et précise, tout en économisant les ressources matérielles mises en oeuvre. Un autre but de l'invention est de rendre cette mesure automatique.

A cet effet, on propose selon l'invention un procédé de mesure par déflectométrie d'au moins une caractéristique de réfraction d'une lentille en au moins un point de mesure spécifique de cette lentille, comportant les étapes consistant à :
- élaborer un faisceau lumineux collimaté dirigé vers la lentille,
- détacher un groupe localisé d'au moins trois rayons lumineux non coplanaires du faisceau lumineux, ces rayons lumineux étant regroupés autour d'un axe de mesure dans un cylindre de mesure ayant une section sensiblement plus petite que la lentille mesurée,
- mesurer la déviation imprimée par la lentille à ces rayons lumineux,
- en déduire la valeur de la caractéristique de réfraction de la lentille au point de mesure.

La lentille restant fixe par rapport au faisceau lumineux, la position de l'axe de mesure est variable d'une mesure à l'autre pour s'adapter à celle du point de mesure.

L'invention a également pour objet un appareil de mesure d'au moins une caractéristique de réfraction d'une lentille en au moins un point spécifique de cette lentille, comportant :
- un support agencé pour accueillir une telle lentille, seule ou sur sa monture,
- d'un premier côté dudit support, des moyens d'éclairement incluant un système optique pour élaborer un faisceau lumineux collimaté dirigé vers la lentille installée sur ledit support, et
- d'un côté ou de l'autre du support, des moyens de détachement de rayons lumineux du faisceau lumineux, aptes à détacher un groupe localisé d'au moins trois rayons lumineux non coplanaires regroupés autour d'un axe de mesure dans un cylindre de mesure ayant une section sensiblement plus petite que la lentille mesurée,
- d'un second côté du support, des moyens d'acquisition propres à relever les déviations imprimées par la lentille à ces rayons lumineux détachés et à délivrer un signal représentatif de cette déviation,
- un système électronique et informatique programmé pour déduire desdites déviations la valeur de la caractéristique de réfraction de la lentille au point de mesure.

Selon l'invention, le support étant fixe par rapport aux moyens d'éclairement, les moyens de détachement des rayons lumineux possèdent une géométrie adaptative pilotée par le système électronique et informatique pour modifier la position de l'axe de mesure en fonction de la position du point de mesure.

Grâce à la sélection des rayons lumineux détachés, la position de l'axe de mesure est donc modifiable à chaque mesure pour coïncider, au moins approximativement, avec la position du point de mesure considéré sur la lentille. La mesure ainsi réalisée se focalise sur un champ étroit autour d'un ou plusieurs axe(s) de mesure mobile(s) ou adaptatif(s). Cette double caractéristique de mobilité et d'étroitesse du champ de mesure distingue fondamentalement le procédé selon l'invention d'une mesure de type cartographique à champ large et axes de mesure multiples fixes. On obtient ainsi les avantages d'une mesure ciblée : précision et économie de ressources combinés. En particulier, le recalage pour distinguer les impacts des rayons sur l'écran de projection peut être opéré de façon simple et rapide dans la mesure où il n'est mis en oeuvre qu'un nombre réduit de rayons sur une faible étendue. D'autre part, contrairement aux appareils à champ étroit et axe de mesure fixe de l'état de la technique, tels que les frontofocomètres, l'axe de mesure n'est pas figé. Il est possible de déplacer cet axe de mesure, par une sélection appropriée des rayons, pour l'amener sur le point de la lentille où l'on souhaite réaliser la mesure.

On obtient ainsi la polyvalence de mesure d'un appareil de cartographie. Mais, en restreignant la mesure déflectométrique à la proximité du point d'intérêt, on s'affranchit de la mesure de tous les autres points inutiles de la lentille et du calcul de la carte de niveau ou de points sur l'ensemble de la lentille, ainsi que du problème technique de recalage des impacts des rayons. On économise ainsi de coûteuses ressources de mesure et de calcul tout en renforçant la précision de la mesure finale au point spécifique d'intérêt.

Avantageusement, les rayons lumineux détachés sont automatiquement sélectionnés en fonction de la position du point de mesure, de telle sorte que l'axe de mesure passe au voisinage du ou sur le point de mesure considéré, sans déplacement de la lentille.

Plus précisément, l'axe de mesure est tel que les rayons lumineux détachés frappent la lentille en un groupe de points d'impacts dont le barycentre se confond avec le point d'impact sur la lentille de l'axe de mesure. L'axe de mesure coupe la lentille à moins d'1 mm du point de mesure considéré.

Dans un mode de réalisation particulièrement avantageux, les rayons lumineux du faisceau étant détachables selon une géométrie prédéfinie, on sélectionne les rayons détachés de telle sorte que l'axe de mesure coupe la lentille au plus près du point de mesure considéré. Les moyens de détachement sont donc conçus pour détacher sélectivement un ensemble de rayons lumineux détachables prédéterminés et le système électronique et informatique est programmé pour piloter les moyens de détachement de manière à réaliser une sélection automatique des rayons lumineux détachés telle que l'axe de mesure coupe la lentille au plus près du point de mesure considéré. En pratique, par exemple, les moyens de détachement des rayons du faisceau lumineux comportent un masque ou écran actif transparent fixe par rapport à la lentille et apte à, et piloté par le système électronique et informatique pour, afficher sélectivement, en positif ou négatif, au moins deux groupes distincts d'au moins trois motifs de détachement des rayons regroupés autour d'au moins deux axes de mesure distincts. Par exemple, le masque actif est un écran graphique comportant une trame de motifs individuellement activables sous le pilotage du système électronique et informatique. Il s'agit typiquement d'un écran LCD Le système électronique et informatique est programmé pour activer un nombre donné de motifs et pour sélectionner les motifs activés parmi l'ensemble des motifs de la trame du masque de détachement de telle sorte que le barycentre des motifs activés soit situé au plus proche du point de mesure considéré.

Dans un autre mode d'exécution, les moyens de détachement des rayons du faisceau lumineux comportent un masque passif qui comporte au moins trois motifs permanents de détachement des rayons et qui est mobile suivant un ou deux degré de liberté perpendiculairement à l'axe de mesure.

Selon une autre caractéristique avantageuse de l'invention, les rayons lumineux sont regroupés autour de l'axe de mesure dans un rayon inférieur à 10 mm et de préférence à 5 mm. Typiquement, les rayons lumineux sont regroupés autour de l'axe de mesure dans un rayon compris entre 3 et 4 mm.

Avantageusement, le point de mesure affecte au moins une position distincte du centre optique et du centre géométrique de la lentille. Le procédé est appliqué à la mesure d'au moins une caractéristique de réfraction en au moins deux points distincts de cette même lentille. La lentille mesurée étant du type multifocale, on mesure la caractéristique optique aux points de référence pour la vision de loin et au point de référence pour la vision de près de la lentille. On peut alors procéder de deux façons différentes. Selon un premier mode de réalisation, on réalise successivement des mesures en chaque point de mesure, la position de l'axe de mesure étant modifiée à chaque mesure pour coïncider, approximativement au moins, avec la position sur la lentille du point de mesure considéré, sans déplacement de la lentille. Selon second mode de réalisation, on détache simultanément plusieurs groupes localisés de rayons lumineux regroupés dans des cylindres de mesure qui possèdent des sections sensiblement plus petites que la lentille et qui ne se recoupent pas.

Selon un autre aspect avantageux de l'invention relatif à la résolution simple et rapide du problème du recalage évoqué précédemment, pour mesurer la déviation imprimée par la lentille aux rayons lumineux détachés du faisceau, on relève la position les impacts de ces rayons sur un écran de projection et on distingue les différents impacts entre eux pour les associer individuellement aux rayons dont ils sont issus, exclusivement à partir de leur position sur l'écran de projection. De préférence alors, on distingue les impacts des rayons exclusivement par leur ordre de répartition sur l'écran de projection.

Selon encore une autre caractéristique avantageuse de l'invention, le procédé comprend une étape consistant à acquérir la position du point de mesure dans un référentiel absolu et sélectionner automatiquement le groupe localisé de rayons lumineux détachés pour que l'axe de mesure passe au voisinage de ce point de mesure. Avantageusement, l'étape d'acquisition de la position du point de mesure comporte une étape de lecture des marques de la lentille (L) à mesurer.

Le procédé comporte alors avantageusement les étapes préliminaires de:
- définir la position d'un référentiel de la lentille dans le référentiel absolu,
- définir la position du point de mesure dans le référentiel de la lentille,
- en déduire la position du point de mesure dans le référentiel absolu.

La lentille étant une lentille ophtalmique de lunettes présentant un marquage définissant son référentiel, l'étape de définition du référentiel de la lentille est précédée d'une étape de détermination de la position de ces marquages dans le référentiel absolu, ce dont il est déduit par calcul la position de son référentiel dans le référentiel absolu.

La lentille étant une lentille ophtalmique de lunettes, il comporte une étape d'identification des marquages ou de l'absence de marquage de la lentille ophtalmique, ce dont il est déduit le type de la lentille ophtalmique. Le nombre et/ou la position du ou des point(s) de mesure dans le référentiel de la lentille sont alors avantageusement déduits au moins en partie du marquage et/ou du type de la lentille.

### DESCRIPTION DETAILLEE D'UN EXEMPLE DE REALISATION

La description qui va suivre en regard des dessins annexés d'un mode de réalisation, donné à titre d'exemple non limitatif, fera bien comprendre en quoi consiste l'invention et comment elle peut être réalisée.

Dans les dessins annexés :
- la figure 1 est une vue schématique d'ensemble d'un appareil de mesure des caractéristiques de réfraction d'une lentille selon l'invention ;
- la figure 2 est une vue en plan du masque actif seul, réalisé sous la forme d'un écran graphique LCD ;
- la figure 3 est une vue en plan de la face avant d'une lentille correctrice progressive sur laquelle sont reportées les marquages classiques de cette lentille ;
- la figure 4 est une vue en plan de la lentille de la figure 3 qui, après avoir été placée dans l'appareil de mesure, est superposée au masque actif, un groupe de rayons lumineux axé sur et concentré autour du point de référence pour la vision de loin ayant été détaché par activation des pixels correspondants du masque LCD ;
- la figure 5 est une vue en perspective dans une configuration analogue à celle de la figure 4 et montrant quatre rayons détachés autour du point de référence pour la vision de loin d'une lentille progressive par activation des motifs correspondants du masque actif, pour la mesure de puissance de la lentille au point de référence pour la vision de loin ;

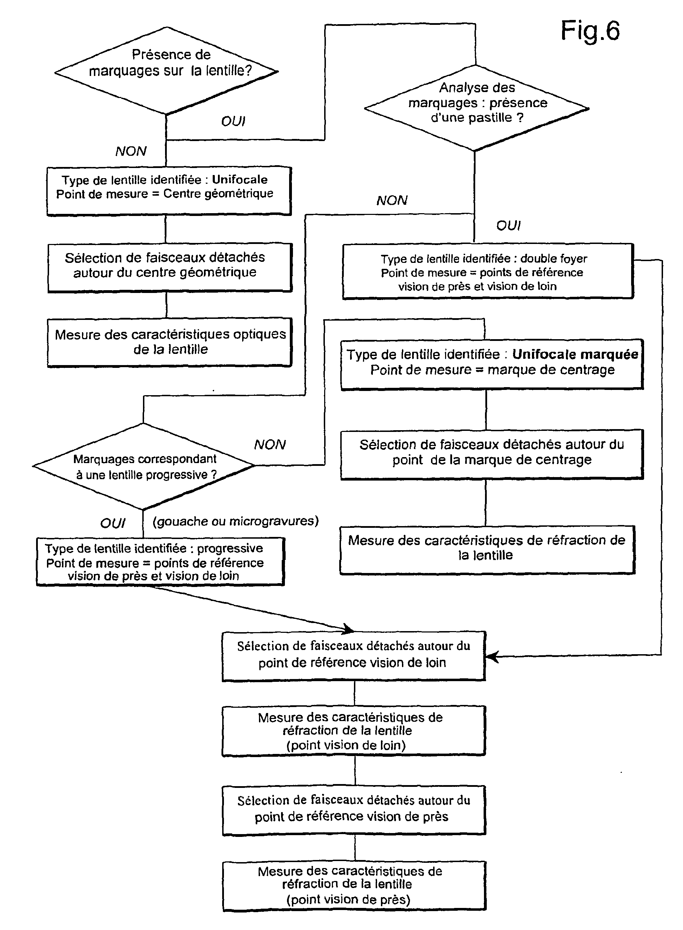

- la figure 6 est un algorithme du programme exécuté par le système électronique et informatique au vu des marquage de lentille ophtalmique détectés par les moyens de reconnaissance d'image.

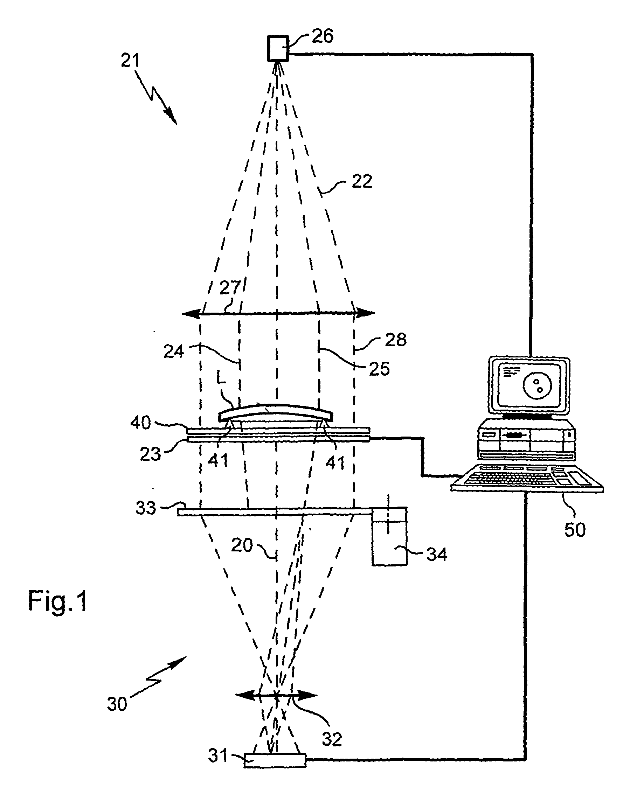

A la figure 1, on a représenté schématiquement les principaux composants d'un appareil de mesure automatique conforme à l'invention.

Cet appareil sert à mesurer des caractéristiques de réfraction, telles que les puissances sphérique, cylindrique et prismatique, avec pour les deux dernières leurs orientations, d'une lentille ophtalmique L en un ou plusieurs points spécifiques de cette lentille.

L'appareil comporte un support fixe 40 agencé pour accueillir la lentille ophtalmique L non détourée que l'on souhaite mesurer. La lentille L est accueillie à l'horizontale avec sa face avant convexe tournée vers le haut. En l'espèce, le support 40 consiste en une plaque de verre pourvue d'un trépied 41. On pourra bien entendu utiliser tout autre type de support de lentille laissant libre ses zones à mesurer, comme par exemple une pince à trois branches à serrage concentrique saisissant la lentille à mesurer par sa tranche. La lentille à mesurer L est mise en place sur le support 40 par l'opérateur ou un organe de manipulation automatisé. La lentille est placée sur le support 40 de manière quelconque, ou tout au moins sans centrage mécanique précis, et ne sera plus manipulée ni déplacée d'un autre manière par la suite.

De part et d'autre de ce support 40, l'appareil de mesure selon l'invention comporte, suivant un axe optique principalement vertical 20 :
- d'un premier côté dudit support, des moyens d'éclairement 21 incluant un système optique pour élaborer un faisceau lumineux 22 collimaté dirigé vers la lentille ophtalmique L installée sur le support, et
- d'un second côté du support, des moyens de détachement 23 de certains rayons lumineux tels que les rayons 24, 25, 35 du faisceau lumineux 22, 28, aptes à détacher un groupe localisé d'au moins trois rayons lumineux non coplanaires regroupés autour d'un axe de mesure passant par le point de mesure de la lentille, dans un cylindre de mesure ayant une section sensiblement plus petite que la lentille mesurée,
- d'un second côté du support, des moyens des moyens d'acquisition 30 propres à relever les déviations imprimées par la lentille à ces rayons lumineux détachés et à délivrer un signal directement ou indirectement représentatif de cette déviation,
- un système électronique et informatique 50 pilotant les moyens d'éclairement 21 et les moyens de détachement 23, recevant le signal délivré par les moyens des moyens d'acquisition 30 et notamment programmé pour déduire des déviations relevées par les moyens d'acquisition la valeur de la caractéristique de réfraction de la lentille au point de mesure.

Les moyens d'éclairement 21 sont ménagés au-dessus du support de la lentille L et comportent un système optique pour élaborer un faisceau lumineux collimaté dirigé vers la lentille ophtalmique installée sur ledit support. En l'espèce, les moyens d'éclairement comportent une source lumineuse 26 qui est agencée pour éclairer la lentille L en position de mesure. Cette source 26 est une source ponctuelle propre à fournir un faisceau divergent dirigé vers la lentille L. Elle peut par exemple être réalisée sous la forme d'une diode électroluminescente (LED) ou d'une diode laser de préférence associées à une fibre optique.

Le système optique des moyens d'éclairement 21 comporte en outre une lentille de collimation 27 centrée sur l'axe optique 20 et placée entre la source 26 et le support de la lentille ophtalmique mesurée L. Cette lentille de collimation 27 permet de générer en aval un faisceau 28 de rayons de lumière parallèles. Ce faisceau est de grande dimension, supérieure à celle de la lentille L.

De l'autre côté du support 40 de la lentille L, en dessous de celui-ci, sont disposés les moyens de détachement 23. Ces moyens de détachement sont propres à détacher un groupe localisé d'au moins trois rayons lumineux non coplanaires regroupés autour d'un axe de mesure 37 passant par le point de mesure de la lentille, dans un cylindre de mesure ayant une section sensiblement plus petite que la lentille L mesurée. L'axe de mesure 37 est défini par le fait que les rayons lumineux détachés 35 frappent la lentille L en un groupe de points d'impacts dont le barycentre se confond avec le point d'impact sur la lentille L de l'axe de mesure 37.

Conformément à une caractéristique essentielle de l'invention, le support 40 de la lentille L étant fixe par rapport aux moyens d'éclairement, les moyens de détachement des rayons lumineux possèdent une géométrie adaptative pilotée par un système électronique et informatique 50 pour modifier la position de l'axe de mesure en fonction de la position du point de mesure. Plus précisément, les moyens de détachement 23 sont conçus pour permettre une sélection automatique des rayons lumineux détachés, de telle sorte que la position de l'axe de mesure soit modifiable à chaque mesure pour passer par le point de mesure considéré, sans déplacement de la lentille L.

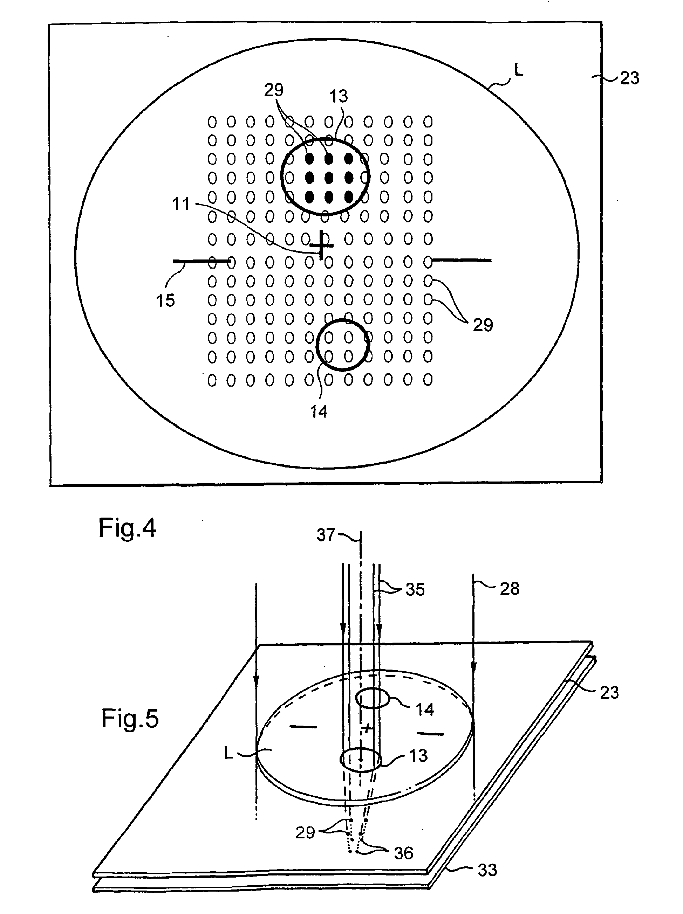

En l'espèce, les moyens de détachement des rayons du faisceau lumineux sont constitués par un masque actif transparent 23 de dimensions supérieures à celles de la lentille à mesurer L et dont la partie activable est de dimensions suffisantes pour couvrir la majeure partie de la lentille ou tout au moins, comme illustré par la figure 4, pour couvrir les zones de vision de près et de loin d'une lentille ophtalmique progressive. Ce masque est disposé en aval de la lentille ophtalmique L, c'est-à-dire entre le support 40 de la lentille L et les moyens d'analyse. Le masque actif 23 est placé fixe et centré sur l'axe optique principal vertical 20 des moyens d'éclairement et des moyens d'analyse 30. Cet axe optique 20 est en fait l'axe commun de certaines lentilles du système optique centrées par rapport à la source 26 et d'un récepteur optique 31 faisant partie des moyens d'analyse 30 situés de l'autre côté du support 40 de la lentille L.

Ce masque actif 23 est apte à, et piloté par le système électronique et informatique 50 pour, afficher sélectivement, en positif ou négatif, au moins deux groupes distincts d'au moins trois motifs de détachement des rayons regroupés autour d'au moins deux axes de mesure distincts.

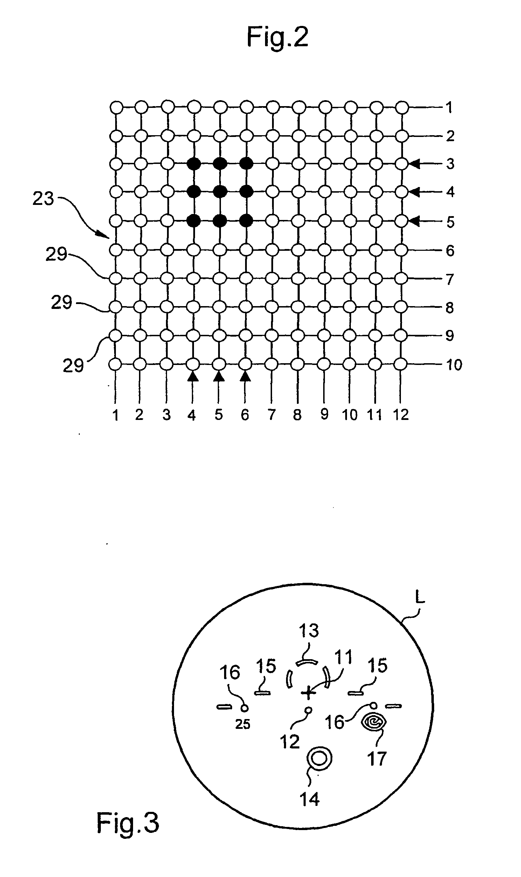

Dans l'exemple illustré, comme cela est visible sur la figure 2, le masque actif possède une pluralité de motifs opaques activable et désactivables individuellement sous le pilotage du système électronique et informatique. Le masque 23 présenté comporte un réseau de motifs, ici circulaires ou ovoïdaux, régulièrement répartis dans un rectangle centré sur le centre géométrique du pourtour circulaire de la lentille L et dont le côté est voisin du rayon de la lentille L.

Typiquement, le masque actif 23 peut être réalisé sous la forme d'un écran transparent à cristaux liquides (LCD) ou analogue, comme dans l'exemple proposé. Il peut s'agir d'un écran spécifique comportant une trame de motifs de taille et d'espacement propre. Mais on peut aussi utiliser un écran graphique disponible dans le commerce dont plusieurs pixels plus fins sont activés pour constituer de tels motifs. Autrement dit, les pixels de l'écran formant masque actif 23 peuvent être des points ou motifs Hartmann (et donc espacés), comme dans l'exemple de la figure, ou des pixels contigus tels qu'on les trouvent dans les écrans graphiques standard.

Le schéma de la figure 2 donne un exemple de masque actif permettant de sélectionner la zone restreinte de la lentille L sur laquelle s'exerce le détachement de rayons lumineux. Ce masque est ici constitué d'un écran à cristaux liquides (LCD) transparent, comportant une trame de motifs ou pixels (ici ronds ou ovoïdaux) individuellement adressables et répartis en 10 lignes et 11 colonnes. Il est possible avec ce type d'écran LCD d'allumer un groupe quelconque de pixels. Pour leur activation, les motifs ou pixels 29 sont adressés individuellement en ligne et colonne par le système 50, via une carte d'interface électronique (non représentée). Pour activer un pixel, c'est-à-dire le rendre opaque, le système 50 rend active la ligne et la colonne correspondant à ce pixel. Ainsi, dans l'exemple de la figure 2, le système électronique et informatique 50 pilote l'activation des lignes 3, 4, 5 et des colonnes 4, 5, 6 pour activer les 9 points correspondant à ces coordonnées.

Le système électronique et informatique 50 est programmé pour activer un nombre donné de motifs 29 disposés selon un agencement prédéfini et figé et pour sélectionner les motifs activés parmi l'ensemble des motifs de la trame du masque de détachement 23, de telle sorte que le barycentre des motifs activés soit situé au plus proche du point de mesure considéré.

Quoi qu'il en soit, les motifs du masque sont activables par petits groupes comptant généralement moins d'une dizaine de motifs pour détacher du faisceau un groupe de rayons localisé. On comprend en effet que, pour réaliser une mesure déflectométrique en un point spécifique, les motifs activables du masque ne sont jamais activés tous simultanément, comme cela serait le cas pour réaliser une cartographie. Les rayons lumineux ainsi détachés sont au maximum au nombre de 40 et sont regroupés autour de l'axe de mesure dans un rayon inférieur à 10 mm et de préférence même au maximum au nombre de 20 regroupés dans un rayon inférieur à 5 mm. Les calculs et les essais montrent qu'un nombre de rayons lumineux compris entre 3 et 9 répartis dans un rayon compris entre 3 et 4 mm procure des résultats optimums.

Les moyens de détachement 23 sont donc ici conçus pour détacher sélectivement un ensemble de rayons lumineux détachables prédéterminés et le système électronique et informatique 50 est alors programmé pour piloter les moyens de détachement 23 de manière à réaliser une sélection automatique des rayons lumineux détachés 35 telle que l'axe de mesure 37 coupe la lentille L au plus près du point de mesure considéré.

En variante ou en combinaison, on pourra prévoir que le système électronique et informatique 50 est programmé pour piloter les moyens de détachement 23 de manière à réaliser une sélection automatique des rayons lumineux détachés 35 telle que l'axe de mesure 37 coupe la lentille L à moins d'1 mm du point de mesure considéré.

Dans l'exemple présenté sur la figure 4, neuf motifs contigus ont été activés pour détacher autant de rayons lumineux traversant la zone délimitée par le cercle de vision de loin 13 de la lentille L. Ces rayons ainsi détachés sont répartis autour d'un axe de mesure qui passe au voisinage, ou plus précisément au plus près possible, du point de mesure qui est le point de référence pour la vision de loin qui est le centre du cercle de vision de loin 13.

Dans l'exemple présenté sur la figure 5, similaire à celui de la figure 4, quatre motifs 29 situés aux quatre sommets d'un carré ont été activés par le système 50 sur le masque actif 23. Ces quatre motifs (ici de forme carrée) détachent quatre rayons 35 du faisceau 28 passant sur ou au voisinage du cercle de vision de loin 13 et donc répartis autour d'un axe de mesure 37 passant par le point de référence pour la vision de loin situé au centre du cercle de vision de loin 13. On peut observer sur la figure 5 que les rayons détachés 35 sont déviés par la lentille L en fonction des puissances de réfraction de celle-ci dans la zone de vision de loin au voisinage du point de référence pour la vision de loin. Les rayons ainsi déviés frappent, après leur détachement par le masque actif 23, l'écran de projection 33 en des points d'impact qui sont matérialisés par les ombres 36 des motifs activés 29 du masque 23. Les positions de ces ombres 36 sont relevées au moyen des moyens d'acquisition 30.

En variante à l'écran actif proposé ci-dessus, on pourra également prévoir que les moyens de détachement des rayons du faisceau lumineux soient réalisés sous la forme d'un masque passif qui comporte au moins trois motifs permanents de détachement des rayons et qui est mobile suivant un ou deux degrés de liberté perpendiculairement à l'axe de mesure.

Les moyens d'acquisition 30 sont ménagés en dessous des moyens de détachement. Ces moyens d'acquisition sont propres à mesurer, en coordination avec un système électronique et informatique, la déviation imprimée par la lentille à ces rayons lumineux détachés et à en déduire la valeur de la caractéristique de réfraction de la lentille au point de mesure.

Les moyens d'acquisition comportent un écran de projection des rayons détachés et un capteur de la position des impacts de ces rayons sur l'écran de projection.

Le capteur de position est ici constitué par le récepteur optique 31 précité. Ce dernier peut, par exemple, être un capteur matriciel ou une caméra avec objectif. Si le récepteur optique est un capteur matriciel, on lui adjoint un objectif 32 et, éventuellement, un diaphragme non prévu dans l'exemple illustré. Si le récepteur optique est une caméra, ces éléments sont remplacés par l'objectif même de la caméra.

L'écran de projection est un écran translucide 33 dépoli, intercalé perpendiculairement à l'axe optique 20 donc, horizontalement) entre le support 40 de la lentille L et le récepteur optique 31. L'écran translucide dépoli est de préférence en verre ou analogue, dépoli en surface pour diffracter. Il s'agit par exemple d'un disque monté tournant et entraîné en rotation par un moteur 34 autour de l'axe optique 20.

L'appareil selon l'invention permet une mesure de puissance de réfraction sphérique, cylindrique ou prismatique en un point d'intérêt quelconque de la lentille, qui peut être différent du centre optique ou géométrique de cette lentille. Le système électronique et informatique 50 possède donc au moins un mode de fonctionnement dans lequel il pilote les moyens de détachement des rayons lumineux pour qu'ils sélectionnent le groupe de rayons lumineux de telle sorte que l'axe de mesure passe au voisinage d'un point de mesure déterminé sensiblement distinct du centre optique et du centre géométrique de la lentille, et ce sans déplacement de la lentille.

Il peut être utile de mesurer une puissance de réfraction en plusieurs points d'intérêts d'une même lentille. A cet effet, le système électronique et informatique 50 possède au moins un mode fonctionnement dans lequel il pilote les moyens de détachement 23 des rayons lumineux pour qu'ils sélectionnent, successivement ou simultanément, au moins deux groupes de rayon lumineux distincts regroupés autour de deux axes de mesure distincts passant par deux points de mesure distincts de cette même lentille. Cela est le cas typiquement lorsque l'on souhaite mesurer les valeurs de puissances au point de référence pour la vision de loin et au point de référence pour la vision de près.

En pratique, le système électronique et informatique 50 possède une mémoire dans laquelle est inscrit un marqueur du type, multifocale ou unifocale, de la lentille mesurée. Le système électronique et informatique 50 est programmé pour que, si le marqueur indique que la lentille à mesurer est du type multifocale, il pilote les moyens de détachement 23 des rayons lumineux pour sélectionner simultanément ou successivement deux groupes de rayons lumineux autour de deux axes de mesure distincts passant, l'un par le point de référence pour la vision de loin et l'autre par le point de référence pour la vision de près de la lentille multifocale.

L'appareil de mesure comporte en outre des moyens de repérage pour repérer la position du point de mesure. Ces moyens de repérage comportent :
- des moyens pour définir et mémoriser dans une mémoire du système électronique et informatique 50 la position d'un référentiel de la lentille dans un référentiel absolu,
- des moyens pour définir et mémoriser dans une mémoire du système électronique et informatique 50 la position du point de mesure dans le référentiel de la lentille.

Concrètement, les moyens pour définir et mémoriser la position d'un référentiel de la lentille dans un référentiel absolu comportent des moyens de reconnaissance d'image aptes à localiser des marquages de lentille ophtalmique et à en déduire la position du référentiel de la lentille dans le référentiel absolu.

Ces moyens de reconnaissance d'image sont constitués d'une part des moyens d'acquisition 30 qui fournissent un signal représentatif de l'ombre de la lentille L sous le faisceau lumineux 22, 28 et d'autre part d'un programme de reconnaissance d'image exécuté par le système électronique et informatique 50, selon des principes de reconnaissance d'image classiques.

Les moyens de reconnaissance d'image sont de plus aptes à identifier les marquages ou l'absence de marquage de la lentille ophtalmique, à en déduire le type de la lentille ophtalmique et à inscrire dans la mémoire du système électronique et informatique le marqueur correspondant au type de lentille détecté.

Il existe plusieurs types de lentilles ophtalmiques : les lentilles unifocales, progressives ou à discontinuité de puissance (double ou triple foyer). Ces différents types de lentilles sont facilement identifiables sans nécessiter de mesure de caractéristiques optiques de prescription, en utilisant les marquages ou repère de la lentille.

On entend par marquages ou repères :
- les marquages gouache sur les lentilles progressives, ces marquages définissant a minima un axe, un point de centrage, une zone contrôle de la vision de loin (VL) au centre de laquelle se trouve le point de référence pour la vision de loin, une zone de contrôle de la vision de près (VP) au centre de laquelle se trouve le point de référence pour la vision de près,
- les microgravures gravées sur ce même type de lentilles, ces gravures définissant un référentiel de la lentille et en particulier l'axe de la lentille, le haut et le bas, et la position horizontale du centre de référence ou point de référence prisme,
- les pastilles à segment courbe ou plat, qui définissent un axe d'orientation de la lentille (segment), un point de centrage (milieu du segment) ainsi qu'une zone de vision de près (intérieur de la pastille) et une zone de vision de loin (extérieur et au dessus de la pastille),
- les pastilles à segment rond qui définissent une zone de vision de près (intérieur de la pastille) et une zone de vision de loin (extérieur et au dessus de la pastille),
- les marquages gouache sur certaines lentilles unifocales, qui définissent un axe et un point de centrage (en général une croix).

Les lentilles ne possédant ni marquages ni repère sont en général des lentilles unifocales.

En ce qui concerne plus particulièrement les lentilles ophtalmiques à addition progressive de puissance, on sait que, lors de sa fabrication, toute lentille progressive est munie de repères provisoires sous la forme d'un marquage à la peinture et de repères permanents sous la forme de gravures. Les repères provisoires permettent un centrage commode de la lentille préalablement à son montage. Les repères permanents permettent d'identifier, sur la monture du patient, la nature de la lentille ophtalmique progressive, la valeur de l'addition ainsi que de vérifier ou rétablir, après effacement des repères provisoires, le centrage exact de ladite lentille. On comprend en effet que les repères provisoires seront effacés par l'opticien avant la remise des lunettes à son client et ils pourront, au besoin, être rétablis à partir des repères permanents gravés qui restent sur la lentille ophtalmique.

Plus précisément, comme le montre la figure 3, les repères provisoires comprennent habituellement :
- une croix 11 dite de montage ou centrage, matérialisant le centre de la zone de vision de loin, destinée à être positionnée en regard du centre de la pupille du porteur quand celui-ci regarde à l'infini droit devant lui ; elle permet de positionner verticalement et horizontalement la progression de puissance de la lentille L1 par rapport à l'oeil, de telle sorte que le porteur trouve facilement, comme prévu par le concepteur de la lentille, la puissance correctrice dont il a besoin en vision de loin, en vision intermédiaire et en vision de près ;
- un point central 12 situé, selon les types de lentilles, de 2 à 6 mm au-dessous de la croix de montage 11 et qui localise le "centre optique" de la lentille L1 ; ce "centre optique" est conventionnellement, pour une lentille progressive, le point de «référence prisme » où est mesurée la puissance prismatique nominale de la lentille L1 correspondant à la prescription du porteur ;
- un cercle 13 de mesure de la puissance de vision de loin de la lentille, situé dans la partie supérieure de la lentille L1, juste au-dessus de la croix de montage 11, et qui localise, en son centre, le point de référence pour la vision de loin ; il s'agit traditionnellement du lieu qui devait, selon l'état de la technique, être amené par l'opticien au droit d'un embout de frontofocomètre pour mesurer la puissance de vision de loin de la lentille L1 ;
- un cercle 14 de mesure de la puissance de vision de près de la lentille, situé dans la partie inférieure de la lentille L1 et qui entoure le centre ou point de référence de la zone de vision de près ; ce centre est décentré du côté nasal de 2 à 3 mm et la distance qui le sépare de la croix de montage 11 constitue la longueur nominale de la progression de la lentille L1 ;
- un ou plusieurs traits 15 repérant l'horizontale de la lentille L1 et qui seront utilisés pour le centrage.

Comme le montre également la figure 3, les repères permanents comprennent en général :
- deux petits cercles ou signes 16 localisés sur l'horizontale de la lentille L1 passant par le centre optique et situés systématiquement à 17 mm de part et d'autre du centre optique 12; ces gravures permettent de retrouver le centrage horizontal et vertical de la lentille ;
- un signe 17 permettant d'identifier la marque et la nature exacte de la lentille progressive (par exemple V pour Varilux®) qui est gravé sous le petit rond ou signe nasal ;
- un nombre à 2 ou 3 chiffres représentant la valeur de l'addition (par exemple 30 ou 300 pour une addition de 3,00 D) qui est gravé sous le petit rond ou signe temporal.

Pour mémoire, on se souviendra que, pour les lentilles à foyers multiples présentant une ou plusieurs lignes de discontinuité de puissance (délimitant par exemple une zone, appelée pastille, de vision de près), ces lignes tiennent lieu de repères permanents.

Lorsqu'une lentille L à mesurer est placée sur le support 41, son image ou ombre sous le faisceau lumineux 22, 28 est captée par les moyens d'acquisition 31 sans sélection de rayons particuliers, c'est-à-dire sans que le masque 23 ne soit activé pour afficher un quelconque motif de détachement. Le masque 23 reste donc transparent ou neutre et les moyens d'acquisition perçoivent l'image de la lentille L et de ses éventuels marquages. Le système électronique et informatique 50 est programmé pour reconnaître automatiquement, par un algorithme de reconnaissance d'image approprié, ces différents marquages ou repère (ou leur absence) et en déduire le type de lentille.

La reconnaissance du type de lentille peut néanmoins aussi être réalisée de manière manuelle, en saisissant cette information le système électronique et informatique 50.

Le système électronique et informatique 50 est programmé pour déduire automatiquement du type de la lentille le nombre et/ou la position du ou des point(s) de mesure dans le référentiel de la lentille.

Le système électronique et informatique 50 est encore programmé pour déduire de la position du référentiel de la lentille L dans le référentiel absolu et de la position du point de mesure dans le référentiel de la lentille, la position du point de mesure dans le référentiel absolu et pour piloter les moyens de détachement pour sélectionner automatiquement le groupe localisé de rayons lumineux détachés de telle sorte que l'axe de mesure passe au voisinage de ce point de mesure.

La reconnaissance du type de la lentille est exploitée par le programme du système 50 pour déterminer le ou les points d'intérêt (ou points de mesure) de la lentille.

Plus précisément le système électronique et informatique est programmé de la façon suivante, conformément à l'algorithme représenté sur la figure 5.

Si la lentille ne présente aucun marquage, la lentille est classée comme unifocale. La zone d'intérêt (voisinage du centre optique) est proche du centre géométrique de la lentille. Le système pilote alors le masque actif 23 pour qu'il détache un groupe de rayons lumineux autour d'un axe de mesure passant par le centre géométrique de la lentille L. Le programme du système 50 compare les positions de référence des motifs du masque apparaissant sur l'écran dépoli 33 lorsqu'aucune lentille à mesurer n'est présente sur l'axe optique du dispositif de mesure (ses positions de référence étant acquises lors d'une opération préliminaire de préréglage), avec les positions des motifs correspondants du masque visualisés sur l'écran dépoli après déviation par la lentille L à mesurer. Le programme en déduit les déviations des différents rayons détachés par le masque actif 23. Celui de ces rayons qui n'a pas été dévié correspond à la position du centre optique de la lentille. Si, comme cela sera le plus souvent le cas, il n'existe pas de rayon n'ayant subi aucune déviation, le programme procède à une interpolation à partir des rayons les moins déviés, par exemple par application de la méthode des moindres carrés sur un modèle polynomial.

Si la lentille présente un marquage de lentille unifocale consistant en une marque de centrage, le point de mesure est assigné sur cette marque de centrage.

Si la lentille présente un marquage de lentille à variation progressive de puissance, on repère au moyen de ce marquage un référentiel de la lentille et le point de mesure est défini au point de référence pour la vision de loin et/ou au point de référence pour la vision de près tels que définis par le fabriquant dans le référentiel marqué de la lentille.

Si la lentille présente une pastille de lentille à double foyer, le point de mesure est défini au point de référence pour la vision de loin et/ou au point de référence pour la vision de près tels que définis par le fabriquant par rapport à la pastille repérée.

Dans le cas d'une lentille progressive marquée, les marquages indiquent les positions des points de référence pour la vision de loin et pour la vision de près (centre de marquages en forme de cercle généralement).

Dans le cas d'un verre double foyer, le milieu de la pastille nous donne la position du point VP. La zone située au dessus de la pastille est la zone de VL, il nous suffit donc de prendre un point dans cette zone pour déterminer les caractéristiques optiques en VL.

Dans le cas d'une lentille progressive sans marquages gouache, les microgravures indiquent au système l'orientation et la position du point de référence prisme de la lentille. Le programme du système 50 en déduit une zone haute qui correspond à la vision de loin et une zone basse qui correspond à la vision de près. Le programme assigne alors successivement ou conjointement comme points de mesure un point dans chacune de ces zones pour obtenir les puissances de réfraction en vision de loin et en vision de près. Il est aussi possible de rentrer les paramètres de positionnement des points de référence pour la vision de loin et pour la vision de près par rapport aux microgravures afin d'améliorer la précision de la mesure.

Dans le cas d'une lentille unifocale marquée, la croix marquée constitue le point de centrage de la lentille qui est alors assigné comme point de mesure.

Dans le cas d'une lentille pointée au fronto, le point d'intérêt est le point fronto milieu.

Une fois identifiés le ou les points d'intérêt à mesurer, le programme du système 50 réalise une mesure des caractéristiques de prescription, uniquement en ce ou ces points.

Typiquement, le programme du système 50 calcule la puissance et l'astigmatisme de la lentille ophtalmique.

On sait que pour une lentille unifocale, la distance entre le foyer et la face arrière de la lentille ophtalmique représente la puissance frontale.

La position de la face arrière de la lentille ophtalmique L dans le référentiel absolu de l'appareil est donnée, soit par la fourniture d'une valeur moyenne ou dépendant d'informations sur la lentille L à mesurer telle que sa base de galbe, soit au moyen d'un palpage avec des moyens de palpage mécaniques ou sans contact appropriés. Cette position est mémorisée dans une mémoire du système 50. Pour déterminer le foyer, le programme du système 50 compare les positions de référence des motifs du masque 23 apparaissant sur l'écran dépoli 33 lorsqu'aucune lentille à mesurer n'est présente sur l'axe optique du dispositif de mesure (ses positions de référence étant acquises lors d'une opération préliminaire de préréglage), avec les positions des motifs correspondants du masque visualisés sur l'écran dépoli après déviation par la lentille L à mesurer. Le programme en déduit les déviations des différents rayons détachés par le masque actif 23. Compte tenu de la distance entre le masque 23 et l'écran de projection 33 (connue par construction), on en déduit par calcul l'angle de déviation des rayons lumineux issus du détachement de faisceau réalisé par le masque 23.

On compare, pour les différents rayons détachés frappant la lentille L en plusieurs points voisins, la position et la direction des rayons lumineux en aval de la lentille, ce qui permet de calculer la position du foyer de la lentille au point de mesure visé par lequel passe l'axe de mesure situé au centre du groupe de rayons détachés (et donc sa puissance, qui est l'inverse de la distance du foyer à la lentille ophtalmique) et l'astigmatisme de la lentille ophtalmique (valeur et axe d'astigmatisme) s'il y a astigmatisme.

Cette mesure a donc un caractère local en ce qu'elle affecte une zone de mesure restreinte et concentrée autour du point de mesure.

La figure 4 donne un exemple de mesure locale réalisée sur une lentille progressive en vision de loin. Seuls les points correspondant au cercle de référence de la vision de loin sont activés. La mesure dans cette exemple ne nécessite que 9 points.

Cette manière de procéder permet donc de limiter de manière très importante le nombre total de points de mesure et, partant, de s'affranchir des inconvénients de l'état de l'art antérieur.

La complexité du moyen de mesure est ainsi réduite. En particulier, les problèmes de recalages sont simplifiés du fait du nombre réduit de points ; il n'est pas nécessaire par exemple d'avoir recours à des motifs de recalage particulier (par exemple des croix ou l'absence de point). En particulier, si on détache un seul faisceau, il n'y a plus du tout de problème de recalage.

Si les rayons détachés sont plus nombreux (3 à 9 en pratique), le système électronique et informatique 50 exécute des instructions de lecture de la position des impacts des rayons lumineux sur l'écran de projection propres à distinguer les différents impacts entre eux pour les associer individuellement aux rayons dont ils sont issus, exclusivement à partir de leur position sur l'écran de projection.

Les instructions de lecture du système électronique et informatique 50 distinguent les impacts de rayons exclusivement par leur ordre de répartition sur l'écran.

## Revendications

1. Procédé de mesure par déflectométrie d'au moins une caractéristique de réfraction d'une lentille (L) en au moins un point de mesure spécifique de cette lentille, comportant les étapes consistant à :
- élaborer un faisceau lumineux collimaté (28) dirigé vers la lentille (L),
- détacher un groupe localisé d'au moins trois rayons lumineux (35) non coplanaires du faisceau lumineux (28), ces rayons lumineux étant regroupés autour d'un axe de mesure (37) dans un cylindre de mesure ayant une section sensiblement plus petite que la lentille mesurée (L),
- mesurer la déviation imprimée par la lentille (L) à ces rayons lumineux,
- en déduire la valeur de la caractéristique de réfraction de la lentille (L) au point de mesure,
**caractérisé en ce que**, la lentille mesurée (L) restant fixe par rapport au faisceau lumineux, la position de l'axe de mesure (37) est variable d'une mesure à l'autre pour s'adapter à celle du point de mesure.

2. Procédé selon la revendication précédente, dans lequel les rayons lumineux détachés (35) sont automatiquement sélectionnés en fonction de la position du point de mesure, de telle sorte que l'axe de mesure (37) passe au voisinage du ou sur le point de mesure considéré, sans déplacement de la lentille mesurée (L).

3. Procédé selon la revendication précédente, dans lequel l'axe de mesure est tel que les rayons lumineux détachés (35) frappent la lentille mesurée (L) en un groupe de points d'impacts dont le barycentre se confond avec le point d'impact sur la lentille mesurée (L) de l'axe de mesure (37).

4. Procédé selon la revendication précédente, dans lequel l'axe de mesure (37) coupe la lentille (L) à moins d'1 mm du point de mesure considéré.

5. Procédé selon l'une des deux revendications précédentes, dans lequel les rayons lumineux du faisceau (28) étant détachables selon une géométrie prédéfinie, on sélectionne les rayons détachés (35) de telle sorte que l'axe de mesure (37) coupe la lentille (L) au plus près du point de mesure considéré.

6. Procédé selon l'une des revendications précédentes, dans lequel les rayons lumineux sont regroupés autour de l'axe de mesure dans un rayon inférieur à 10 mm.

7. Procédé selon la revendication précédente, dans lequel les rayons lumineux sont regroupés autour de l'axe de mesure (37) dans un rayon inférieur à 5 mm.

8. Procédé selon la revendication précédente, dans lequel les rayons lumineux sont regroupés autour de l'axe de mesure (37) dans un rayon compris entre 3 et 4 mm.

9. Procédé selon l'une des revendications précédentes, dans lequel le point de mesure affecte au moins une position distincte du centre optique et du centre géométrique de la lentille.

10. Procédé selon l'une des revendications précédentes, appliqué à la mesure d'au moins une caractéristique de réfraction en au moins deux points distincts de cette même lentille.

11. Procédé selon les deux revendications précédentes, dans lequel, la lentille mesurée étant du type multifocale, on mesure la caractéristique optique aux points de référence pour la vision de loin et au point de référence pour la vision de près de la lentille.

12. Procédé de mesure selon l'une des revendications 10 et 11, dans lequel on réalise successivement des mesures en chaque point de mesure, la position de l'axe de mesure étant modifiée à chaque mesure pour coïncider, approximativement au moins, avec la position sur la lentille du point de mesure considéré, sans déplacement de la lentille.

13. Procédé de mesure selon l'une des revendications 10 et 11, dans lequel on détache simultanément plusieurs groupes localisés de rayons lumineux regroupés dans des cylindres de mesure qui possèdent des sections sensiblement plus petites que la lentille et qui ne se recoupent pas.

14. Procédé selon l'une des revendications précédentes, dans lequel, pour mesurer la déviation imprimée par la lentille aux rayons lumineux détachés du faisceau, on relève la position les impacts de ces rayons sur un écran de projection (33) et on distingue les différents impacts entre eux pour les associer individuellement aux rayons dont ils sont issus, exclusivement à partir de leur position sur l'écran de projection.

15. Procédé selon la revendication précédente, dans lequel on distingue les impacts des rayons exclusivement par leur ordre de répartition sur l'écran de projection (33).

16. Procédé de mesure selon l'une des revendications précédentes, comprenant une étape consistant à acquérir la position du point de mesure dans un référentiel absolu et sélectionner automatiquement le groupe localisé de rayons lumineux détachés pour que l'axe de mesure passe au voisinage de ce point de mesure.

17. Procédé de mesure selon la revendication précédente, dans lequel l'étape d'acquisition de la position du point de mesure comporte une étape de lecture des marques de la lentille (L) à mesurer.

18. Procédé de mesure selon l'une des deux revendications précédentes, comprenant les étapes préliminaires de :
- définir la position d'un référentiel de la lentille mesurée (L) dans le référentiel absolu,
- définir la position du point de mesure dans le référentiel de la lentille mesurée (L),
- en déduire la position du point de mesure dans le référentiel absolu.

19. Procédé de mesure selon la revendication précédente, dans lequel, la lentille mesurée (L) étant une lentille ophtalmique de lunettes présentant un marquage définissant son référentiel, l'étape de définition du référentiel de la lentille est précédée d'une étape de détermination de la position de ces marquages dans le référentiel absolu, ce dont il est déduit par calcul la position de son référentiel dans le référentiel absolu.

20. Procédé de mesure selon l'une des revendications précédentes, dans lequel, la lentille étant une lentille ophtalmique de lunettes, il comporte une étape d'identification des marquages ou de l'absence de marquage de la lentille ophtalmique, ce dont il est déduit le type de la lentille ophtalmique.

21. Procédé de mesure selon la revendication précédente, dans lequel le nombre et/ou la position du ou des point(s) de mesure dans le référentiel de la lentille sont déduits au moins en partie du marquage et/ou du type de la lentille.

22. Procédé de mesure selon la revendication précédente, dans lequel, si la lentille ne présente aucun marquage, la lentille est classée comme unifocale et le point de mesure est assigné au centre géométrique du pourtour de la lentille.

23. Procédé de mesure selon la revendication 21, dans lequel, si la lentille présente un marquage de lentille unifocale consistant en une marque de centrage, le point de mesure est assigné sur cette marque de centrage.

24. Procédé de mesure selon la revendication 21, dans lequel, si la lentille présente un marquage de lentille à variation progressive de puissance, on repère au moyen de ce marquage un référentiel de la lentille et le point de mesure est défini au point de référence pour la vision de loin et/ou au point de référence pour la vision de près tels que définis par le fabriquant dans le référentiel marqué de la lentille.

25. Procédé de mesure selon la revendication 21, dans lequel, si la lentille présente une pastille de lentille à double foyer, le point de mesure est défini au point de référence pour la vision de loin et/ou au point de référence pour la vision de près tels que définis par le fabriquant par rapport à la pastille repérée.

26. Procédé selon l'une des revendications précédentes, dans lequel la caractéristique optique mesurée est la puissance sphérique et/ou la puissance cylindrique avec son orientation et/ou la puissance prismatique avec son orientation.

27. Appareil de mesure d'au moins une caractéristique de réfraction d'une lentille (L) en au moins un point spécifique de cette lentille, comportant :
- un support (40) agencé pour accueillir une telle lentille, seule ou sur sa monture,
- d'un premier côté dudit support, des moyens d'éclairement (21) incluant un système optique pour élaborer un faisceau lumineux collimaté (28) dirigé vers la lentille mesurée (L) installée sur ledit support, et
- d'un côté ou de l'autre du support (40), des moyens de détachement (23) de rayons lumineux (35) du faisceau lumineux, aptes à détacher un groupe localisé d'au moins trois rayons lumineux (35) non coplanaires regroupés autour d'un axe de mesure (37) dans un cylindre de mesure ayant une section sensiblement plus petite que la lentille mesurée (L),
- d'un second côté du support (40), des moyens d'acquisition (30) propres à relever les déviations imprimées par la lentille mesurée (L) à ces rayons lumineux détachés et à délivrer un signal représentatif de cette déviation,
- un système électronique et informatique (50) programmé pour déduire desdites déviations la valeur de la caractéristique de réfraction de la lentille mesurée (L) au point de mesure,
**caractérisé en ce que**, le support (40) étant fixe par rapport au faisceau (28) issu des moyens d'éclairement, les moyens de détachement (23) des rayons lumineux possèdent une géométrie adaptative pilotée par le système électronique et informatique (50) pour modifier la position de l'axe de mesure (37) en fonction de la position du point de mesure.

28. Appareil de mesure selon la revendication précédente, dans lequel les moyens de détachement (23) sont pilotés par le système électronique et informatique (50) pour réaliser une sélection automatique des rayons lumineux détachés (35), de telle sorte que la position de l'axe de mesure (37) soit modifiable à chaque mesure pour passer au voisinage du ou sur le point de mesure considéré, sans déplacement de la lentille mesurée (L).

29. Appareil de mesure selon la revendication précédente, dans lequel l'axe de mesure (37) est tel que les rayons lumineux détachés (35) frappent la lentille mesurée (L) en un groupe de points d'impacts dont le barycentre se confond avec le point d'impact sur la lentille (L) de l'axe de mesure (37).

30. Appareil de mesure selon la revendication précédente, dans lequel le système électronique et informatique (50) est programmé pour piloter les moyens de détachement (23) de manière à réaliser une sélection automatique des rayons lumineux détachés (35) telle que l'axe de mesure (37) coupe la lentille mesurée (L) à moins d'1 mm du point de mesure considéré.

31. Appareil selon l'une des deux revendications précédentes, dans lequel les moyens de détachement (23) sont conçus pour détacher sélectivement un ensemble de rayons lumineux détachables prédéterminés et le système électronique et informatique (50) est programmé pour piloter les moyens de détachement (23) de manière à réaliser une sélection automatique des rayons lumineux détachés (35) telle que l'axe de mesure (37) coupe la lentille mesurée (L) au plus près du point de mesure considéré.

32. Appareil de mesure selon l'une des revendications 27 à 31, dans lequel les rayons lumineux sont regroupés autour de l'axe de mesure dans un rayon inférieur à 10 mm.

33. Appareil de mesure selon la revendication précédente, dans lequel les rayons lumineux sont regroupés autour de l'axe de mesure (37) dans un rayon inférieur à 5 mm.

34. Appareil de mesure selon la revendication précédente, dans lequel les rayons lumineux sont regroupés autour de l'axe de mesure (37) dans un rayon compris entre 3 et 4 mm.

35. Appareil de mesure selon l'une des revendications 27 à 34, dans lequel les moyens de détachement (23) des rayons du faisceau lumineux comportent un masque ou écran actif transparent fixe par rapport à la lentille (L) et apte à, et piloté par le système électronique et informatique (50) pour, afficher sélectivement, en positif ou négatif, au moins deux groupes distincts d'au moins trois motifs de détachement (29) des rayons regroupés autour d'au moins deux axes de mesure (37) distincts.

36. Appareil de mesure selon la revendication précédente, dans lequel le masque actif est un écran graphique comportant une trame de motifs (29) individuellement activables sous le pilotage du système électronique et informatique (50).

37. Appareil de mesure selon la revendication précédente, prise en dépendance de la revendication 31, dans lequel le système électronique et informatique (50) est programmé pour activer un nombre donné de motifs (29) et pour sélectionner les motifs activés parmi l'ensemble des motifs de la trame du masque de détachement (23) de telle sorte que le barycentre des motifs activés (29) soit situé au plus proche du point de mesure considéré.

38. Appareil de mesure selon l'une des deux revendications précédentes, dans lequel l'écran graphique est un écran LCD.

39. Appareil de mesure selon l'une des revendications 27 à 34, dans lequel les moyens de détachement des rayons du faisceau lumineux comportent un masque passif qui comporte au moins trois motifs permanents de détachement des rayons et qui est mobile suivant au moins un degré de liberté perpendiculairement à l'axe de mesure.

40. Appareil de mesure selon la revendication précédente, dans lequel le masque passif est mobile perpendiculairement à l'axe de mesure suivant un second degré de liberté distinct du premier.

41. Appareil de mesure selon l'une des revendications 27 à 40, dans lequel, une lentille à mesurée (L) étant installée sur le support (40), le système électronique et informatique (50) possède au moins un mode de fonctionnement dans lequel il pilote les moyens de détachement (23) des rayons lumineux pour qu'ils sélectionnent le groupe de rayons lumineux de telle sorte que l'axe de mesure (37) passe au voisinage d'un point de mesure sensiblement distinct du centre optique et du centre géométrique de la lentille à mesurer (L).

42. Appareil de mesure selon l'une des revendications 27 à 41, dans lequel, une lentille à mesurer (L) étant installée sur le support (40), le système électronique et informatique (50) possède au moins un mode fonctionnement dans lequel il pilote les moyens de détachement (23) des rayons lumineux (35) pour qu'ils sélectionnent, successivement ou simultanément, au moins deux groupes de rayon lumineux (35) distincts regroupés autour de deux axes de mesure (37) distincts passant par deux points de mesure distincts de cette même lentille à mesurer (L).

43. Appareil selon les deux revendications précédentes, dans lequel le système électronique et informatique (50) possède une mémoire dans laquelle est inscrit un marqueur du type, multifocale ou unifocale, de la lentille mesurée (L) et dans lequel, si le marqueur indique que la lentille à mesurer est du type multifocale, le système électronique et informatique (50) pilote les moyens de détachement (23) des rayons lumineux pour que les points de mesure comportent le point de référence pour la vision de loin et le point de référence pour la vision de près de la lentille multifocale.

44. Appareil selon l'une des revendications 27 à 43, dans lequel les moyens d'acquisition (30) comportent un écran de projection (33) des rayons détachés (35) et un capteur (31) de la position des impacts (36) de ces rayons sur l'écran de projection (33).

45. Appareil selon la revendication précédente, dans lequel le système électronique et informatique (50) exécute des instructions de lecture de la position des impacts (36) des rayons lumineux (35) sur l'écran de projection (33) propres à distinguer les différents impacts entre eux pour les associer individuellement aux rayons dont ils sont issus, exclusivement à partir de leur position sur l'écran de projection (33).

46. Appareil selon la revendication précédente, dans lequel les instructions de lecture du système électronique et informatique (50) distinguent les impacts (36) des rayons détachés (35) exclusivement par leur ordre de répartition sur l'écran de projection (33).

47. Appareil de mesure selon l'une des revendications 27 à 46, comportant des moyens (30) pour acquérir la position du point de mesure dans le référentiel absolu et pour piloter les moyens de détachement (23) pour sélectionner automatiquement le groupe localisé de rayons lumineux détachés (35) de telle sorte que l'axe de mesure (37) passe au voisinage de ce point de mesure.

48. Appareil selon la revendication précédente, dans lequel les moyens (30) pour acquérir la position du point de mesure comportent des moyens de lecture des marques de la lentille (L).

49. Appareil selon l'une des deux revendications précédentes, comportant des moyens pour repérer la position du point de mesure, incluant :
- des moyens pour définir et mémoriser dans une mémoire du système électronique et informatique (50) la position d'un référentiel de la lentille dans un référentiel absolu,
- des moyens pour définir et mémoriser dans une mémoire du système électronique et informatique (50) la position du point de mesure dans le référentiel de la lentille (L),
le système électronique et informatique (50) étant programmé pour déduire de la position du référentiel de la lentille (L) dans le référentiel absolu et de la position du point de mesure dans le référentiel de la lentille, la position du point de mesure dans le référentiel absolu.

50. Appareil de mesure selon la revendication précédente, dans lequel les moyens pour définir et mémoriser la position d'un référentiel de la lentille (L) dans un référentiel absolu comportent des moyens de reconnaissance d'image aptes à localiser des marquages de lentille ophtalmique et à en déduire la position du référentiel de la lentille dans le référentiel absolu.

51. Appareil de mesure selon l'une des revendications 27 à 50, destiné à la mesure d'une lentille ophtalmique et comportant des moyens de reconnaissance d'image aptes à identifier les marquages ou l'absence de marquage de la lentille ophtalmique, à en déduire le type de la lentille ophtalmique et à inscrire dans la mémoire du système électronique et informatique (L) le marqueur correspondant au type de lentille détecté.

52. Appareil de mesure selon la revendication précédente, dans lequel le système électronique et informatique (50) est programmé pour déduire automatiquement du type de la lentille le nombre et/ou la position du ou des point(s) de mesure dans le référentiel de la lentille.

53. Appareil de mesure selon la revendication précédente, dans lequel le système électronique et informatique est programmé pour mettre en oeuvre le procédé selon l'une des revendications 22 à 26.

## Claims

1. A method of measuring at least one refractive characteristic of a lens (L) at at least one specific measurement point of said lens by measuring deflection, the method comprising the steps consisting in:
· generating a collimated light beam (29) directed towards the lens (L);
· detaching a localized group of at least three non-coplanar light rays (35) from the light beam (28), these light rays being grouped together about a measurement axis (37) in a measurement cylinder of section that is substantially smaller than that of the lens (L) under measurement;
· measuring the deflection imparted by the lens (L) on the light rays; and
· deducing therefrom the value of the refractive characteristic of the lens (L) at the measurement point;
the method being **characterized in that** the lens (L) under measurement remains stationary relative to the light beam, and the position of the measurement axis (37) is variable from one measurement to another in order to be adapted to the position of the measurement point.

2. A method according to the preceding claim, in which the detached light rays (35) are selected automatically as a function of the position of the measurement point, such that the measurement axis (37) passes close to or through the measurement point under consideration, without moving the lens (L) under measurement.

3. A method according to the preceding claim, in which the measurement axis is such that the detached light rays (35) strike the lens (L) under measurement at a group of impact points presenting a barycenter that coincides with the point of impact of the measurement axis (37) on the lens (L) under measurement.

4. A method according to the preceding claim, in which the measurement axis (37) intersects the lens (L) at less than 1 mm from the measurement point under consideration.

5. A method according to either one of the two preceding claims, in which the light rays of the beam (28) are detachable in application of a predefined geometry, and the detached rays (35) are selected in such a manner that the measurement axis (37) intersects the lens (L) as close as possible to the measurement point under consideration.

6. A method according to any preceding claim, in which the light rays are grouped together about the measurement axis within a radius of less than 10 mm.

7. A method according to the preceding claim, in which the light rays are grouped together about the measurement axis (37) within a radius of less than 5 mm.

8. A method according to the preceding claim, in which the light rays are grouped together about the measurement axis (37) within a radius lying in the range 3 mm to 4 mm.

9. A method according to any preceding claim, in which the measurement point applies to at least one position that is distinct from the optical center and the geometrical center of the lens.

10. A method according to any preceding claim, applied to measuring at least one refractive characteristic at at least two distinct points of a single lens.

11. A method according to both of the two preceding claims, in which, for a measurement lens of the multi-focal type, the optical characteristic is measured at the reference point for far vision and at the reference point for near vision of the lens.

12. A measurement method according to claim 10 or claim 11, in which measurements are performed successively at each measurement point, the position of the measurement axis being modified on each measurement to coincide, at least approximately, with the position on the lens of the measurement point under consideration, without moving the lens.

13. A measurement method according to claim 10 or claim 11, in which a plurality of localized groups of light rays that are grouped together in measurement cylinders possessing sections that are substantially smaller than the lens and that do not overlap are detached simultaneously.

14. A method according to any preceding claim, in which, in order to measure the deflection imparted by the lens on the light rays detached from the beam, the positions of the impacts of said rays on a projection screen (33) are identified and the various impacts are distinguished from one another so as to be associated individually with the rays from which they are derived, exclusively on the basis of their positions on the projection screen.

15. A method according to the preceding claim, in which the impacts of the rays are distinguished solely by their distribution order on the projection screen (33).

16. A measurement method according to any preceding claim, including a step consisting in acquiring the position of the measurement point in an absolute frame of reference and in automatically selecting the localized group of light rays that are detached so that the measurement axis passes close to said measurement point.

17. A measurement method according to the preceding claim, in which the step of acquiring the position of the measurement point includes a step of reading marking on the lens (L) for measurement.

18. A measurement method according to either one of the two preceding claims, the method including the preliminary steps of:
· defining the position of a frame of reference of the lens (L) under measurement in the absolute frame of reference;
· defining the position of the measurement point in the frame of reference of the lens (L) under measurement; and
· deducing therefrom the position of the measurement point in the absolute frame of reference.

19. A measurement method according to the preceding claim, in which, for a lens (L) under measurement constituted by an ophthalmic lens for eyeglasses presenting marking that defines its frame of reference, the step of defining the frame of reference of the lens is preceded by a step of determining the positions of said marking in the absolute frame of reference, from which the position of the lens frame of reference in the absolute frame of reference is deduced by calculation.

20. A measurement method according to any preceding claim, in which, for a lens that is an ophthalmic lens for eyeglasses, the method includes a step of identifying marking or absence of marking on the ophthalmic lens, from which the type of the ophthalmic lens is deduced.

21. A measurement method according to the preceding claim, in which the number and/or the position of the measurement point(s) in the frame of reference of the lens is/are deduced, at least in part, from the marking and/or the type of the lens.

22. A measurement method according to the preceding claim, in which, if the lens does not present any marking, the lens is classified as being a single-vision lens and the measurement point is assigned to the geometrical center of the outline of the lens.

23. A measurement method according to claim 21, in which, if the lens presents marking of a single-vision lens in the form of a centering mark, the measurement point is assigned to said centering mark.

24. A measurement method according to claim 21, in which, if the lens presents marking of a lens having progressive power variation, said marking is used to identify a frame of reference of the lens and the measurement point is defined as being the reference point for far vision and/or the reference point for near vision as defined by the manufacturer in the frame of reference marked on the lens.

25. A measurement method according to claim 21, in which, if the lens presents a segment of a bifocal lens, the measurement point is defined at the reference point for far vision and/or at the reference point for near vision as defined by the manufacturer relative to the identified segment.

26. A method according to any preceding claim, in which the measured optical characteristic is spherical power and/or cylindrical power together with its orientation, and/or prismatic power together with its orientation.

27. Apparatus for measuring at least one refractive characteristic of a lens (L) at at least one specific point of said lens, the apparatus comprising:
· a support (40) arranged to receive a such lens, on its own or mounted in a frame;
· on a first side of said support, lighting means (21) including an optical system for generating a collimated light beam (28) directed towards the lens (L) under measurement installed on said support;
· on one side or the other of the support (40), detachment means (23) for detaching light rays (35) from the light beam, suitable for detaching a localized group of at least three non-coplanar light rays (35) grouped together about a measurement axis (37) in a measurement cylinder of section that is substantially smaller than the section of the lens (L) under measurement;
· on a second side of the support (40), acquisition means (30) suitable for identifying the deflections imparted by the lens (L) under measurement on said detached light rays and for delivering a signal representative of said deflections; and
· an electronic and computer system (50) programmed to deduce from said deflections the value of the refractive characteristic of the lens (L) under measurement at the measurement point;
the apparatus being **characterized in that** the support (40) is stationary relative to the beam (28) coming from the lighting means, and the detachment means (23) for detaching the light rays possess variable geometry controlled by the electronic and computer system (50) to modify the position of the measurement axis (37) as a function of the position of the measurement point.

28. Measurement apparatus according to the preceding claim, in which the detachment means (23) are controlled by the electronic and computer system (50) to select the detached light rays (35) automatically in such a manner that the position of the measurement axis (37) is modifiable on each measurement to pass close to or through the measurement point under consideration, without moving the lens (L) under measurement.

29. Measurement apparatus according to the preceding claim, in which the measurement axis (37) is such that the detached light rays (35) strike the lens (L) under measurement at a group of impact points having a barycenter that coincides with the point of impact of the measurement axis (37) on the lens (L).

30. Measurement apparatus according to the preceding claim, in which the electronic and computer system (50) is programmed to control the detachment means (23) in such a manner as to select the detached light rays (35) automatically so that the measurement axis (37) intersects the lens (L) under measurement at less than 1 mm from the measurement point under consideration.

31. Measurement apparatus according to either one of the two preceding claims, in which the detachment means (23) are designed to detach selectively a set of predetermined detachable light rays, and the electronic and computer system (50) is programmed to control the detachment means (23) in such a manner as to select the detached light rays (35) automatically so that the measurement axis (37) intersects the lens (L) under measurement as close as possible to the measurement point under consideration.

32. Measurement apparatus according to any one of claims 27 to 31, in which the light rays are grouped together about the measurement axis within a radius of less than 10 mm.

33. Measurement apparatus according to the preceding claim, in which the light rays are grouped together about the measurement axis (37) within a radius of less than 5 mm.

34. Measurement apparatus according to the preceding claim, in which the light rays are grouped together about the measurement axis (37) within a radius lying in the range 3 mm to 4 mm.

35. Measurement apparatus according to any one of claims 27 to 34, in which the detachment means (23) for detaching rays from the light beam comprise a transparent active screen or mask that is stationary relative to the lens (L) and suitable under the control of the electronic and computer system (50) for selectively displaying in positive or negative manner each of at least three detachment patterns (29) of rays grouped together about at least two distinct measurement axes (37).

36. Measurement apparatus according to the preceding claim, in which the active mask is a graphics screen comprising an array of patterns (29) that are individually activatable under the control of the electronic and computer system (50).

37. Measurement apparatus according to the preceding claim, as dependent on claim 31, in which the electronic and computer system (50) is programmed to activate a given number of patterns (29) and to select the activated patterns from the set of patterns in the array of the detachment mask (23) in such a manner that the barycenter of the activated patterns (29) is situated as close as possible to the measurement point under consideration.

38. Measurement apparatus according to either one of the two preceding claims, in which the graphics screen is an LCD screen.

39. Measurement apparatus according to any one of claims 27 to 34, in which the detachment means for detaching rays from the light beam comprise a passive mask having at least three permanent ray-detachment patterns and that is movable with at least one degree of freedom perpendicularly to the measurement axis.

40. Measurement apparatus according to the preceding claim, in which the passive mask is movable perpendicularly to the measurement axis with a second degree of freedom distinct from the first.

41. Measurement apparatus according to any one of claims 27 to 40, in which, for a lens (L) to be measured installed on the support (40), the electronic and computer system (50) possesses at least one mode of operation in which it controls the light ray detachment means (23) to select a group of light rays in such a manner that the measurement axis (37) passes close to a measurement point that is substantially distinct from the optical center and the geometrical center of the lens (L) to be measured.

42. Measurement apparatus according to any one of claims 27 to 41, in which, for a lens (L) to be measured installed on the support (40), the electronic and computer system (50) possesses at least one mode of operation in which it controls the light ray detachment means (23) so that they select successively or simultaneously at least two distinct groups of light rays (35) grouped together about two distinct measurement axes (37) passing through two distinct measurement points of a single lens (L) to be measured.

43. Apparatus according to the two preceding claims, in which the electronic and computer system (50) possesses a memory in which a marker of the multi-focal or single-vision type of the lens (L) under measurement is written, and in which, if the marker indicates that the lens to be measured is of the multi-focal type, the electronic and computer system (50) controls the light ray detachment means (23) so that the measurement points include the far vision reference point and the near vision reference point of the multi-focal lens.

44. Apparatus according to any one of claims 27 to 43, in which the acquisition means (30) comprise a projection screen (33) onto which the detached rays (35) are projected, and a position sensor (31) for sensing the positions of the impacts (36) of said rays on the projection screen (33).

45. Apparatus according to the preceding claim, in which the electronic and computer system (50) executes instructions for reading the positions of the impacts (36) of the light rays (35) on the projection screen (33) that are suitable for distinguishing between the various impacts so as to associate them individually with the rays from which they are derived, exclusively on the basis of their positions on the projection screen (33).

46. Apparatus according to the preceding claim, in which the read instructions of the electronic and computer system (50) distinguish the detached ray impacts (36) exclusively by their distribution order on the projection screen (33).

47. Measurement apparatus according to any one of claims 27 to 46, including means (30) for acquiring the position of the measurement point in the absolute frame of reference and for controlling the detachment means (23) to select the localized group of detached light rays (35) automatically in such a manner that the measurement axis (37) passes close to said measurement point.

48. Apparatus according to the preceding claim, in which the means (30) for acquiring the position of the measurement point include means for reading marking on the lens (L) .

49. Apparatus according to either one of the two preceding claims, the apparatus including means for identifying the position of the measurement point, said means including:
· means for defining and storing in a memory of the electronic and computer system (50) the position of a frame of reference of the lens in an absolute frame of reference; and
· means for defining and storing in a memory of the electronic and computer system (50) the position of the measurement point in the frame of reference of the lens (L);
the electronic and computer system (50) being programmed to deduce from the position of the frame of reference of the lens (L) in the absolute frame of reference and from the position of the measurement point in the frame of reference of the lens, the position of the measurement point in the absolute frame of reference.

50. Measurement apparatus according to the preceding claim, in which the means for defining and storing the position of a frame of reference of the lens (L) in an absolute frame of reference include image recognition means suitable for locating marking of the ophthalmic lens and for deducing therefrom the position of the frame of reference of the lens in the absolute frame of reference.

51. Measurement apparatus according to any one of claims 27 to 50, for measuring an ophthalmic lens and including image recognition means suitable for identifying the marking or lack of marking on the ophthalmic lens, and for deducing therefrom the type of the ophthalmic lens and for writing in the memory of the electronic and computer system (50) the marker corresponding to the detected type of the lens.

52. Measurement apparatus according to the preceding claim, in which the electronic and computer system (50) is programmed to deduce automatically from the type of the lens the number and/or position(s) of the measurement point(s) in the frame of reference of the lens.

53. Measurement apparatus according to the preceding claim, in which the electronic and computer system is programmed to implement the method of the invention according to any one of claims 22 to 26.

## Patentansprüche

1. Verfahren zur Deflektometriemessung von zumindest einem Brechungsmerkmal einer Linse (L) an zumindest einem spezifischen Messpunkt der Linse, umfassend die Schritte:
- Erzeugen eines kollimattierten Lichtbündels (28), gerichtet hin zu der Linse (L),
- Lösen einer lokalisierten Gruppe von zumindest 3 nicht-koplanaren Lichtstrahlen (35) des Lichtbündels (28), wobei die Lichtstrahlen gruppiert bezüglich einer Messachse (37) in einem Messzylinder sind, der über einen Schnitt verfügt, im Wesentlichen kleiner als die zu messende Linse (L)
- Messen der durch die Linse (L) an diesen Lichtstrahlen bewirkten Abweichung
- hieraus Folgern des Wertes des Brechungsmerkmals der Linse (L) am Messpunkt,
**dadurch gekennzeichnet, dass** die zu messende Linse (L) fixiert verbleibt mit Bezug auf das Lichtbündel, wobei die Position der Messachse (37) variabel ist von einer Messung zu einer anderen, zum Zwecke der Anpassung davon bezüglich dem Messpunkt.

2. Verfahren nach dem vorangegangenen Anspruch, bei welchem die gelösten Lichtstrahlen (35) automatisch ausgewählt sind in Abhängigkeit der Position des Messpunktes, so dass die Messachse (37) benachbart zu oder durch den in Frage stehenden Messpunkt verläuft, und zwar ohne dass die zu messende Linse (L) bewegt wird.

3. Verfahren nach dem vorangegangenen Anspruch, bei welchem die Messachse derart vorliegt, dass die gelösten Lichtstrahlen (35) die zu messende Linse (L) in einer Gruppe von Auftreffpunkten treffen, deren Schwerpunkt zusammenfällt mit dem Auftreffpunkt der Messachse (37) an der zu messenden Linse (L).

4. Verfahren nach dem vorangegangenen Anspruch, bei welchem die Messachse (37) die Linse (L) bei weniger als einem Millimeter von dem in Frage stehenden Messpunkt schneidet.

5. Verfahren nach einem der zwei vorangegangenen Ansprüche, bei welchem die Lichtstrahlen des Bündels (28) lösbar sind entsprechend einer vorbestimmten Geometrie, wobei man die gelösten Strahlen (35) derart wählt, dass die Messachse (37) die Linse (L) möglichst nahe am in Frage stehenden Messpunkt schneidet.

6. Verfahren nach einem der vorangegangenen Ansprüche, bei welchem die Lichtstrahlen bezüglich der Messachse in einem Radius von weniger als 10 mm gruppiert sind.

7. Verfahren nach dem vorangegangenen Anspruch, bei welchem die Lichtstrahlen bezüglich der Messachse (37) in einem Radius von weniger als 5 mm gruppiert sind.

8. Verfahren nach den vorangegangenen Ansprüchen, bei welchem die Lichtstrahlen bezüglich der Messachse (37) in einem Radius gruppiert sind, enthalten zwischen 3 und 4mm.

9. Verfahren nach einem der vorangegangenen Ansprüche, bei welchem der Messpunkt zumindest eine Position distinkt von der optischen Mitte und der geometrischen Mitte der Linse betrifft.

10. Verfahren nach einem der vorangegangenen Ansprüche, angewendet zur Messung zumindest einer Brechungseigenschaft an zumindest zwei distinkten Punkten dieser selben Linse.

11. Verfahren nach den zwei vorangegangenen Ansprüchen, bei welchem die zu messende Linse eine multifokale Linse ist, wobei man die optische Eigenschaft am Fernsichtreferenzpunkt und am Nahsichtreferenzpunkt der Linse misst.

12. Messverfahren nach einem der Ansprüche 10 und 11, bei welchem man sukzessive Messungen an jedem Messpunkt durchführt, wobei die Position der Messachse bei jeder Messung modifiziert wird zum Zwecke des Zusammenfallens zumindest in etwa mit der Position des in Frage stehenden Messpunktes an der Linse, und zwar ohne die Linse zu bewegen.

13. Messverfahren nach einem der Ansprüche 10 und 11, bei welchem man gleichzeitig mehrere lokalisierte Gruppen an Lichtstrahlen löst, gruppiert in Messzylindern, die einen Schnitt aufweisen, der im Wesentlichen kleiner ist, als die Linse, wobei sie sich nicht überschneiden.

14. Verfahren nach einem der vorangegangenen Ansprüche, bei welchem zur Messung der Abweichung, bewirkt durch die Linse an den von dem Bündel gelösten Lichtstrahlen man die Position der Auftreffpunkte dieser Strahlen an einem Projektionsschirm (33) erfasst, wobei man die unterschiedlichen Auftreffpunkte untereinander unterscheidet, um sie individuellen Strahlen zuzuordnen, von denen diese herrühren, und zwar ausschließlich ausgehend von ihrer Position an dem Projektionsschirm.

15. Verfahren nach dem vorangegangenen Anspruch, bei welchem man die Auftreffpunkte der Strahlen ausschließlich mittels derer Verteilungsordnung an dem Projektionsschirm (33) unterscheidet.

16. Messverfahren nach einem der vorangegangenen Ansprüche, umfassend einen Schritt, der darin besteht, die Position des Messpunktes in einem absoluten Bezugssystem zu erfassen und automatisch die lokalisierte gelöste Lichtstrahlengruppe derart zu wählen, dass die Messachse benachbart zu diesem Messpunkt verläuft.

17. Messverfahren nach dem vorangegangenen Anspruch, bei welchem der Schritt der Erfassung der Position des Messpunktes einen Schritt des Lesens von Markierungen der zu messenden Linse (L) umfasst.

18. Messverfahren nach einem der zwei vorangegangenen Ansprüche, umfassend die vorangehenden Schritte:
- Definieren der Position eines Bezugssystems der zu messenden Linse (L) in dem absoluten Bezugssystem,
- Definieren der Position des Messpunktes in dem Bezugssystem der zu messenden Linse (L),
- Folgern der Position des Messpunktes in dem absoluten Bezugssystem.

19. Messverfahren nach dem vorangegangenen Anspruch, bei welchem die zu messende Linse (L) eine ophthalmische Brillenlinse ist, aufweisend eine Markierung, die dessen Bezugssystem definiert, wobei dem Schritt der Definition des Bezugssystems der Linse ein Schritt der Bestimmung der Position dieser Markierungen in dem absoluten Bezugssystem vorangeht, woraus mittels Berechnung die Position seines Bezugssystems im absoluten Bezugssystem gefolgert wird.

20. Messverfahren nach einem der vorangegangenen Ansprüche, bei welchem die Linse eine ophthalmische Brillenlinse ist, wobei das Verfahren einen Schritt der Identifizierung der Markierungen oder des Fehlens von Markierungen an der ophthalmischen Linse umfasst, woraus gefolgert wird, von welchem Typ die ophthalmische Linse ist.

21. Messverfahren nach dem vorangegangenen Anspruch, bei welchem die Anzahl und/oder die Position des oder der Messpunkte in dem Bezugssystem der Linse abgeleitet sind zumindest teilweise von der Markierung und/oder dem Typ der Linse.

22. Messverfahren nach dem vorangegangenen Anspruch, bei welchem, wenn die Linse keine Markierung aufweist, die Linse als monofokale Linse eingestuft wird und der Messpunkt der geometrischen Mitte des Umrisses der Linse zugeordnet ist/wird.

23. Messverfahren nach Anspruch 21, bei welchem, wenn die Linse eine Markierung einer monofokalen Linse aufweist, bestehend in einer Zentrierungsmarkierung, der Messpunkt der Zentriermarkierung zugeordnet ist/wird.

24. Messverfahren nach Anspruch 21, bei welchem, wenn die Linse eine progressive Gleitsichtlinsenmarkierung aufweist man mittels dieser Markierung ein Bezugssystem der Linse ermittelt, wobei der Messpunkt definiert am Fernsichtreferenzpunkt und/oder am Nahsichtreferenzpunkt ist/wird, wie definiert von dem Hersteller in dem markierten Bezugssystem der Linse.

25. Messverfahren nach Anspruch 21, bei welchem, wenn die Linse eine Linsenpastille mit zwei Zentren aufweist, der Messpunkt definiert ist/wird, am Referenzpunkt für die Fernsicht und/oder am Referenzpunkt für die Nahsicht, wie von den Hersteller definiert mit Bezug auf die Bezugspastille.

26. Verfahren nach einem der vorangegangenen Ansprüche, bei welchem das gemessene optische Merkmal die sphärische Brechkraft und/oder die zylindrische Brechkraft mit dessen Ausrichtung und/oder die oder Brechkraft mit entsprechender Ausrichtung ist bzw. sind.

27. Messvorrichtung für zumindest ein Brechungsmerkmal einer zu messenden Linse (L) an zumindest einem spezifischen Punkt dieser Linse, umfassend:
- eine Stütze (40), ausgebildet zum Aufnehmen einer solchen Linse, alleine oder an dessen Gestell,
- an einer ersten Seite der Stütze eine Beleuchtungseinrichtung (21), umfassend ein optisches System zum Ausbilden eines kollimattierten Lichtbündels (28), gerichtet hin zu der zu messenden Linse (L), die an der Stütze installiert ist und
- an der einen Seite oder der anderen der Stütze (40) eine Einrichtung (23) zum Lösen von Lichtstrahlen (35) von dem Lichtbündel, fähig zum Lösen einer lokalisierten Gruppe von zumindest drei nicht koplanaren Lichtstrahlen (35), gruppiert bezüglich einer Messachse (37) in einem Messzylinder mit einem Schnitt der im Wesentlichen kleiner ist als die zu messende Linse (L),
- an einer zweiten Seite der Stütze (40) eine Erfassungseinrichtung (30), geeignet zum Aufnehmen der Abweichungen, bewirkt durch die zu messende Linse (L) bezüglich der gelösten Lichtstrahlen und zum Ausgeben eines Signals, repräsentativ bezüglich dieser Abweichung,
- ein elektronisches und computergestütztes System (50), programmiert zum Folgern von den Abweichungen des Wertes der Brechungseigenschaft der zu messenden Linse (L) am Messpunkt,
- **dadurch gekennzeichnet, dass** die Stütze (40) feststehend oder festgelegt ist mit Bezug auf das Bündel (28), ausgehend von der Beleuchtungseinrichtung, wobei die Einrichtung (23) zum Lösen von Lichtstrahlen eine adaptive Geometrie aufweist, gesteuert von dem elektronischen und computergestütztes System (50), um die Position der Messachse (37) in Abhängigkeit der Position des Messpunktes zu modifizieren.

28. Messvorrichtung nach dem vorangegangenen Anspruch, bei welcher die Einrichtung (23) zum Lösen gesteuert wird von dem elektronischen und computergestützten System (50), um eine automatische Auswahl an gelösten Lichtstrahlen (35) derart durchzuführen, dass die Position der Messachse (37) veränderbar ist bei jeder Messung, um in der Nachbarschaft von oder bei dem in Frage stehenden Messpunkt hindurchzutreten, und zwar ohne Bewegung der zu messenden Linse (L).

29. Messvorrichtung nach dem vorangegangenen Anspruch, bei welcher die Messachse (37) derart ist, dass die gelösten Lichtstrahlen (35) die zu messende Linse (L) bei einer Gruppe von Auftreffpunkten beaufschlagen, deren Schwerpunkt zusammenfällt mit dem Auftreffpunkt der Messachse (37) an der Linse (L).

30. Messvorrichtung nach dem vorangegangenen Anspruch, bei welcher das elektronische und computergestützte System programmiert ist, um die Einrichtung (23) zum Lösen derart zu steuern, dass eine automatische Auswahl von gelösten Lichtstrahlen (35) derart erfolgt, dass die Messachse (37) die zu messende Linse (L) bei weniger als einem Millimeter vom in Frage stehenden Messpunkt schneidet.

31. Messvorrichtung nach einem der zwei vorangegangenen Ansprüche, bei welcher die Einrichtung (23) zum Lösen ausgebildet ist zum selektiven Lösen einer Gesamtheit an vorbestimmten lösbaren Lichtstrahlen, wobei das elektronische und computergestützte System (50) programmiert ist, um die Einrichtung (23) zum Lösen derart zu steuern, dass eine automatische Auswahl an gelösten Lichtstrahlen (35) derart erfolgt, dass die Messachse (37) die zu messende Linse (L) möglichst nah am in Frage stehenden Messpunkt schneidet.

32. Messvorrichtung nach einem der Ansprüche 27 bis 31, bei welcher die Lichtstrahlen bezüglich der Messachse in einem Radius von weniger als 10 mm gruppiert sind.

33. Messvorrichtung nach dem vorangegangenen Anspruch, bei welcher die Lichtstrahlen bezüglich der Messachse (37) in einem Radius von weniger als 5 mm gruppiert sind.

34. Messvorrichtung nach dem vorangegangenen Anspruch, bei welcher die Lichtstrahlen bezüglich der Messachse (37) in einem Radius gruppiert sind, enthaltend zwischen 3 und 4 mm.

35. Messvorrichtung nach einem der Ansprüche 27 bis 34, bei welcher die Einrichtung (23) zum Lösen von Strahlen von dem Lichtbündel eine Maske oder einen aktiven transparenten Schirm umfasst, festgelegt in Bezug auf die Linse (L) und ausgelegt und gesteuert von dem elektronischen und computergestützten System (50) um selektiv positiv oder negativ zumindest zwei distinkte Gruppen von zumindest drei Lösemotiven (29) von Strahlen anzuzeigen, gruppiert bezüglich zumindest zwei distinkten Messachsen (37).

36. Messvorrichtung nach dem vorangegangenen Anspruch, bei welchem die aktive Maskierung ein graphischer Schirm ist, umfassend ein Raster an Motiven (29), individuell aktivierbar unter der Steuerung des elektronischen und computergestützten Systems (50).

37. Messvorrichtung nach dem vorangegangenen Anspruch, wenn abhängig vom Anspruch 31, bei welchem das elektronische und computergestützte System (50) programmiert ist, um eine gegebene Anzahl an Motiven (29) zu aktivieren und um die aktivierten Motive unter der Gesamtheit an Motiven des Rasters von Lösemaskierungen (23) derart zu wählen, dass der Schwerpunkt der aktivierten Motive (29) möglichst nahe am in Frage stehenden Messpunkt befindlich ist.

38. Messvorrichtung nach einem der zwei vorangegangenen Ansprüche, bei welcher der graphische Schirm ein Flüssigkristallbildschirm ist.

39. Messvorrichtung nach einem der Ansprüche 27 bis 34, bei welcher die Einrichtung zum Lösen von Strahlen von dem Lichtbündel eine passive Maske umfasst, umfassend zumindest drei permanente Lösemotive für Strahlen und die beweglich ist entsprechend zumindest einem Freiheitsgrad, senkrecht zur Messachse.

40. Messvorrichtung nach dem vorangegangenen Anspruch, bei welcher die passive Maske senkrecht zur Messachse entsprechend einem zweiten Freiheitsgrad, distinkt vom ersten, beweglich ist.

41. Messvorrichtung nach einem der Ansprüche 27 bis 40, bei welcher eine zu messende Linse (L) an der Stütze (40) installiert ist, wobei das elektronische und computergestützte System (50) zumindest einen Betriebsmodus aufweist, in welchem es die Einrichtung (23) zum Lösen von Lichtstrahlen steuert, damit die Gruppe an Lichtstrahlen derart gewählt sei, dass die Messachse (37) in der Nachbarschaft eines Messpunktes verläuft, der im Wesentlichen distinkt zur optischen Mitte und zur geometrischen Mitte der zu messenden Linse (L) ist.

42. Messvorrichtung nach einem der Ansprüche 27 bis 41, bei welcher eine zu messende Linse (L) an der Stütz (40) installiert ist, wobei das elektronische und computergestützte System (50) zumindest einen Betriebsmodus aufweist, in welchem die Einrichtung (23) zum Lösen von Lichtstrahlen (35) gesteuert wird zum sukzessiven oder gleichzeitigen Auswählen von zumindest zwei distinkten Gruppen an Lichtstrahlen (35), gruppiert bezüglich zweier distinkter Messachsen (37), hindurchtretend durch zwei distinkte Messpunkte dieser selben zu messenden Linse (L).

43. Messvorrichtung nach den zwei vorangegangenen Ansprüchen, bei welcher das elektronische und computergestützte System (50) einen Speicher umfasst, in welchem ein Tag eingeschrieben ist, vom Typ multifokal oder monofokal bezüglich der zu messenden Linse (L), und in welchem, wenn die Markierung angibt, dass die zu messende Linse vom multifokalen Typ, das elektronische und computergestützte System (50) die Einrichtung (23) zum Lösen von Lichtstrahlen steuert, damit die Messpunkte den Referenzpunkt für die Fernsicht und den Referenzpunkt für die Nahsicht der multifokalen Linse umfassen.

44. Vorrichtung nach einem der Ansprüche 27 bis 43, bei welcher die Erfassungseinrichtung einen Projektionsfilm (33) für gelöste Strahlen (35) und einen Sensor (31) bezüglich der Auftreffposition (36) der Strahlen an dem Projektionsschirm (33) umfasst.

45. Vorrichtung nach dem vorangegangenen Anspruch, bei welcher das elektronische und computergestützte System (50) Leseinstruktionen bezüglich der Auftreffposition (36) der Lichtstrahlen (35) an den Projektionsschirm (33) ausführt, geeignet zum Unterscheiden der unterschiedlichen Auftreffpunkte untereinander, um sie individuell den Strahlen zuzuordnen, von denen sie herrühren, und zwar ausschließlich basierend auf deren Position an dem Projektionsschirm (33).

46. Vorrichtung nach dem vorangegangenen Anspruch, bei welcher sie Leseinstruktionen des elektronischen und computergestützten Systems (50) die Auftreffpunkte (36) der gelösten Strahlen (35) ausschließlich mittels derer Ordnung in der Verteilung an dem Projektionsschirm (33) unterscheidet.

47. Messvorrichtung nach einem der Ansprüche 27 bis 46, umfassend eine Einrichtung (30) zum Bestimmen der Position des Messpunktes in dem absoluten Bezugssystem, und zum Steuern der Einrichtung (23) zum Steuern der Löseeinrichtung (23), um automatisch die lokalisierte Gruppe an gelösten Lichtstrahlen (35) derart auszuwählen, dass die Messachse (37) in der Nachbarschaft dieses Messpunktes verläuft.

48. Vorrichtung nach dem vorangegangenen Anspruch, bei welcher die Einrichtung (30) zum Bestimmen der Position des Messpunktes eine Einrichtung umfasst zum Lesen von Markierungen der Linse (L).

49. Vorrichtung nach einem der zwei vorangegangenen Ansprüche, umfassend eine Einrichtung zum Erfassen der Position des Messpunktes, umfassend:
- eine Einrichtung zum Definieren und Speichern in einem Speicher des elektronischen und computergestützte Systems (50) der Position eines Bezugssystems der Linse einem absoluten Bezugssystem,
- eine Einrichtung zum Definieren und Speichern in einem Speicher des elektronischen oder computergestützten Systems (50) der Position des Messpunktes in dem Bezugssystem der Linse (L),
- wobei das elektronische und computergestützte System (50) programmiert ist, zum Folgern aus der Position des Bezugssystems der Linse (L) in dem absoluten Bezugssystem und der Position des Messpunktes in dem Bezugssystem der Linse der Position des Messpunktes in dem absoluten Bezugssystem.

50. Vorrichtung nach dem vorangegangenen Anspruch, bei welcher die Einrichtung zum Definieren und Speichern der Position eines Bezugssystems der Linse (L) in einem absoluten Bezugssystem eine Einrichtung umfasst zur Bilderkennung, geeignet Markierungen der ophthalmischen Linse zu lokalisieren und daraus die Position des Bezugssystems der Linse in dem absoluten Bezugssystem zu folgern.

51. Messvorrichtung nach einem der Ansprüche 27 bis 50, bestimmt zur Messung einer ophthalmischen Linse und umfassend eine Bilderkennungseinrichtung, geeignet zum identifizieren von Markierungen oder zum Feststellen des Fehlens von Markierungen der ophthalmischen Linse und um davon ausgehend den Typ der ophthalmischen Linse zur folgern und in dem Speicher des elektronischen und computergestützten Systems den Merker, entsprechend dem Typ der erfassten Linse einzuschreiben.

52. Messvorrichtung nach dem vorangegangenen Anspruch, bei welcher das elektronische und computergestützte System (50) programmiert ist, um automatisch von dem Typ der Linse die Anzahl und/oder die Position des oder der Messpunkte in dem Bezugssystem der Linse zu folgern.

53. Messvorrichtung nach dem vorangegangenen Anspruch, bei welcher das elektronische und computergestützte System programmiert ist um das Verfahren gemäß einem der Ansprüche 22 bis 26 auszuführen.
